(19) **Europäisches Patentamt / European Patent Office / Office européen des brevets**

(11) **EP 1 863 215 B1**

(12) # EUROPEAN PATENT SPECIFICATION

(45) Date of publication and mention
of the grant of the patent:
**30.01.2019 Bulletin 2019/05**

(51) Int Cl.:
*H04L 5/02* (2006.01)          *H04L 27/26* (2006.01)
*H04B 1/713* (2011.01)          *H04B 1/7143* (2011.01)
*H04L 1/18* (2006.01)          *H04J 13/00* (2011.01)
*H04W 72/04* (2009.01)

(21) Application number: **07010616.6**

(22) Date of filing: **29.05.2007**

(54) **Method and apparatus for allocating frequency resources in a wireless communication system supporting frequency division multiplexing**

Verfahren und Vorrichtung zur Zuweisung von Frequenzressourcen in einem drahtlosen Kommunikationssystem mit Frequenzteilungs-Multiplexing

Procédé et appareil d'affectation de ressources de fréquence dans un système de communication sans fil prenant en charge la multidiffusion de division de fréquence

(84) Designated Contracting States:
**DE FI FR GB IT SE**

(30) Priority: **29.05.2006 KR 20060048388**
**22.11.2006 KR 20060116105**
**03.01.2007 KR 20070000817**

(43) Date of publication of application:
**05.12.2007 Bulletin 2007/49**

(73) Proprietor: **Samsung Electronics Co., Ltd.**
**Suwon-si, Gyeonggi-do, 443-742 (KR)**

(72) Inventors:
• **Cho, Yun-Ok**
**Suwon-si**
**Gyeonggi-do (KR)**
• **Moon, Hi-Chan**
**Suwon-si**
**Gyeonggi-do (KR)**
• **Lee, Ju-Ho**
**Suwon-si**
**Gyeonggi-do (KR)**

(74) Representative: **Grünecker Patent- und Rechtsanwälte**
**PartG mbB**
**Leopoldstraße 4**
**80802 München (DE)**

(56) References cited:
**EP-A1- 0 916 204**

• **JIM TOMCIK ET AL: "QFDD Technology Overview Presentation", INTERNET CITATION, 28 October 2005 (2005-10-28), XP002429296, Retrieved from the Internet: URL:http://grouper.ieee.org/groups/802/20/ Contribs/C802.20-05-59.pdf [retrieved on 2007-04-13]**
• **JUNYI LI ET AL: "An integrated approach based on cross-layer optimization - Designing a mobile broadband wireless access network", IEEE SIGNAL PROCESSING MAGAZINE, IEEE SERVICE CENTER, PISCATAWAY, NJ, US, vol. 21, no. 5, 1 September 2004 (2004-09-01), pages 20-28, XP011118149, ISSN: 1053-5888, DOI: 10.1109/MSP.2004.1328085**

**Description**

**BACKGROUND OF THE INVENTION**

1. Field of the Invention

The present invention relates generally to resource allocation in a wireless communication system, and in particular, to a method and apparatus for allocating frequency resources in a wireless communication system supporting Frequency Division Multiplexing (FDM).

2. Description of the Related Art

Generally, wireless communication systems are classified according to their communication methods into a Frequency Division Multiple Access (FDMA) system that divides a predetermined frequency band into a plurality of channels and allows every user to use a frequency channel allocated thereto, a Time Division Multiple Access (TDMA) system in which one frequency channel is time-shared by a plurality of subscribers, and a Code Division Multiple Access (CDMA) system in which multiple subscribers use the same frequency band at the same time and every subscriber performs communication using a different code allocated thereto. With the abrupt development of communication technologies, such wireless communication systems have reached the phase of providing to multiple subscribers high-capacity packet data services as well as the normal voice call services.

In the wireless communication system, a base station determines which resources it will allocate to a particular terminal by performing scheduling to allocate resources to multiple terminals located in its coverage area, and transmits resource allocation information for each terminal over a control channel. The resources can be different according to the type of the wireless communication system. For example, resources in the CDMA system can be code resources such as Walsh codes, resources in the FDMA system can be frequency band resources, resources in an Orthogonal Frequency Division Multiplexing (OFDM) system can be sub-carrier resources, and resources in the TDMA system can be time slots, i.e. time resources. The sub-carrier resources are included in the frequency band resources. Therefore, the term 'resource' as used herein refers to a combination of the code, frequency and time resources, or any part thereof according to the type of the system.

In the wireless communication system, one main factor impeding the high-speed, high-quality data services includes the channel environment. Generally, in wireless communication system, the channel environment is subject to change not only due to Additive White Gaussian Noise (AWGN), but also due to a power variation of a received signal, caused by fading, shadowing, a Doppler effect based on movement and frequent velocity change of terminals, interference by other users or multipath signals, and the like. Therefore, to support the high-speed, high-quality data services in the wireless communication system, it is necessary to efficiently overcome the impeding factors of the channel environment.

A description will now be made of frequency diversity technology and Hybrid Automatic Repeat reQuest (H-ARQ) technology used on an attempt to overcome the impeding factors of the channel environment in the wireless communication system based on FDM.

The typical FDM-based wireless communication systems may include, in addition to the FDMA system, an Orthogonal Frequency Division Multiplexing (OFDM) system that transmits high-capacity packet data using multiple carriers, and a Single Carrier (SC)-FDMA system which is proposed as an uplink multiplexing scheme in Long Term Evolution (LTE) system of 3rd Generation Project Partnership (3GPP), which is the international standardization group.

A frequency diversity technology is one of the technologies for overcoming channel fading in the FDM wireless communication system, such as the OFDM system and the SC-FDMA system. The frequency diversity technology refers to a diversity technology that transmits symbols in one data packet over a wide band when good channels alternate with bad channels in a frequency domain, thereby allowing terminals to uniformly experience the good and bad channel environments. From the viewpoint of a receiver, modulation symbols included in one packet may include symbols received over bad-environment channels and symbols received over good-environment channels. Therefore, the receiver can demodulate the data packet using the symbols received over the good channels. In this manner, the frequency diversity technology can compensate for the change in the channel environment in the FDM wireless communication system.

The frequency diversity technology is not suitable for the traffic, such as a broadcast channel or a common control channel, which should not be particularly applied to the channel environment of a specific user, and for the traffic, such as the real-time traffic, which are susceptible to delay. That is, the frequency diversity technology is suitable for transmission of the traffic of a channel commonly used by multiple users, like the broadcast channel, and of the traffic that are less susceptible to the delay.

Another typical technology for supporting the high-speed, high-quality data services in the wireless communication system can include H-ARQ technology. In operation of the H-ARQ technology in the uplink (UL), a terminal, or a transmitter, transmits a packet, and a base station, or a receiver, sends an Acknowledgement (ACK) or Non-acknowledgement (NACK) of the packet, as a feedback. In addition, the terminal, when it has failed in the packet transmission, retransmits the corresponding packet, thereby increasing a reception success rate of the packet and throughput of the system. The base station performs demodulation using all of the previously transmitted packets and the retransmitted packet, thereby contributing to an improvement in a received signal-to-noise ratio, an error correction coding effect, and a diversity gain in the time axis.

The H-ARQ technology can be classified into Synchronous H-ARQ and Asynchronous H-ARQ according to whether the retransmission time is fixed, or whether the transmission time is varied by a scheduler. A description of a hopping operation in a frequency band during the conventional H-ARQ retransmission will be made herein for a Synchronous H-ARQ.

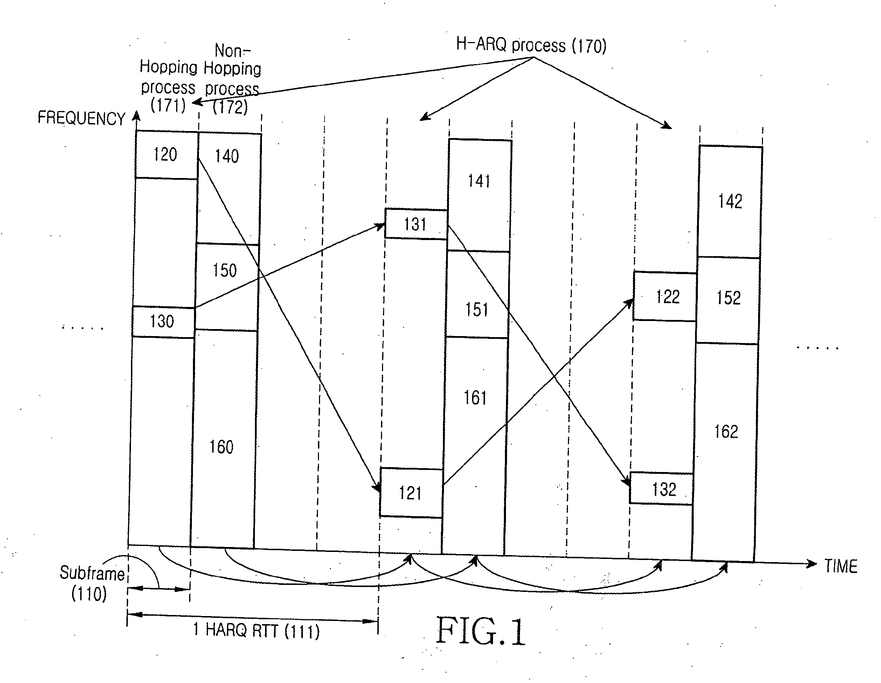

FIG. 1 illustrates a hopping operation for a frequency band in a wireless communication system using the conventional H-ARQ.

In FIG. 1, the horizontal axis is the time domain, and the vertical axis is the frequency domain, or physical frequency resources. In the frequency domain, a basic unit of resources allocated to one terminal is a set of consecutive frequency resources, or consecutive sub-carriers. In the time domain, a basic unit of a single packet transmission is defined as a subframe 110, and the time required until retransmitting one packet after initial transmission is defined as an H-ARQ Round Trip Time (RTT) 111.

The H-ARQ RTT 111 is determined in units of subframes taking into account the time required until generating an expected retransmission packet upon receipt of a feedback of ACK or NACK after transmitting data, and one H-ARQ RTT 111 in the example of FIG. 1 is assumed to be a time for which 4 subframes 110 are transmitted. In this specification, a logical H-ARQ channel that performs a series of operations of transmission-feedback-retransmission between a transmitter and a receiver is defined as one H-ARQ process 170. In one H-ARQ process 170, because a packet transmission interval is identical to the H-ARQ RTT 111, multiple H-ARQ processes are simultaneously performed for efficient transmission.

The multiple H-ARQ processes are divided into a hopping process 171 that hops a frequency band for data transmission during retransmission, and a non-hopping process 172 that intactly uses the frequency band allocated during initial transmission, even for retransmission. Generally, the non-hopping process corresponds to the case of performing frequency-selective scheduling based on channel conditions in the frequency band of each individual transmitter. In this case, because it can be considered that a frequency band having a good channel condition has already been allocated, there is no need to hop the frequency band for data transmission during retransmission.

In the non-hopping process 172, the terminal, allocated frequency bands 140, 150 and 160, transmits data in the same frequency bands 141, 151 and 161 (or 142, 152 and 162) even at the corresponding next H-ARQ times. The hopping process 171 directly related to the present invention can be applied to obtain a frequency diversity gain when the accuracy of the channel conditions used during scheduling decreases as the terminal moves at high speed, or when fixed resources are allocated to one terminal for a long time to stably support a service, like Voice over Internet Protocol (VoIP). In addition, when a different hopping method is applied to each cell, it can also be expected that interference from another cell will be randomized, remarkably increasing expected performance improvement of users located in the boundary of the cell.

Referring to FIG. 1, in operation, a terminal, allocated a frequency band 120 at initial transmission, transmits data after hopping to a frequency band 121 at the next transmission time, and will shift (hop) again to a frequency band 122 during the next retransmission. As a result, one packet will uniformly experience the entire frequency band through three transmissions of 120, 121 and 122, obtaining frequency diversity. Similarly, the terminal, allocated a frequency band 130 at initial transmission, performs data transmission after hopping to frequency bands 131 and 132 at a retransmission time, thereby obtaining frequency diversity through three transmissions of 130, 131 and 132.

In the method of hopping a frequency band for data transmission during H-ARQ retransmission, it should be guaranteed that different frequency resources 120 and 130 allocated at an arbitrary transmission time do not collide with frequency resources 121 and 131 (or 122 and 132) hopped at the next transmission time.

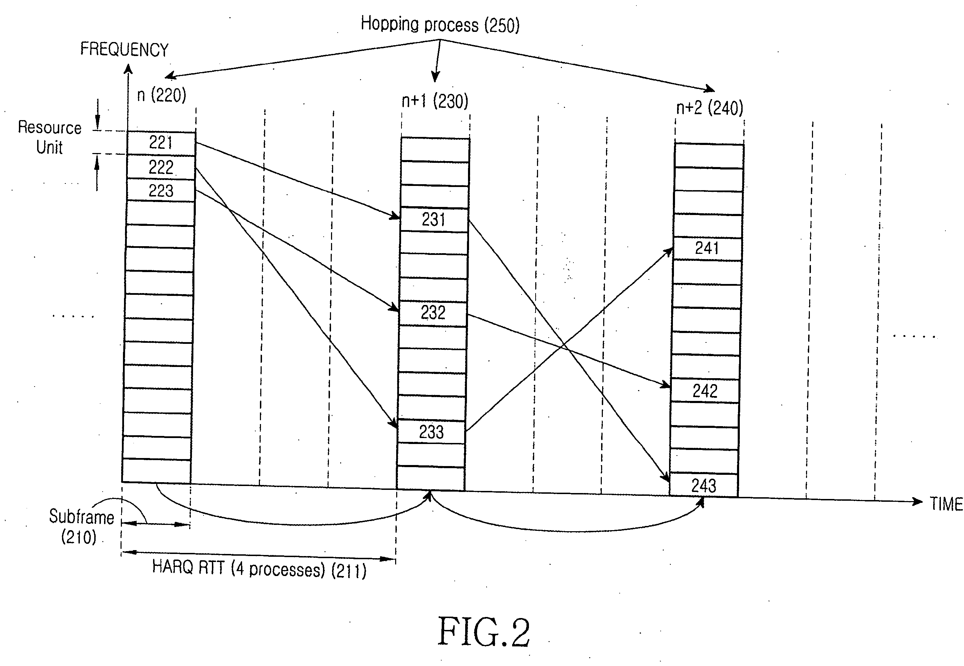

FIG. 2 illustrates an example of a hopping operation during H-ARQ retransmission in the conventional OFDM system. Shown is a method of dividing resources of the entire frequency band into multiple Resource Units (RUs), and independently performing hopping for each individual RU.

In FIG. 2, subframes for transmission of a hopping process 250 are expressed by indexes n, n+1 and n+2, respectively. In the example of FIG. 2, an RU 221 of a time n 220 hops to RUs 231 and 243 at a time n+1 230 and a time n+2 240, respectively, and an RU 222 of the time n 220 hops to RUs 233 and 241 at the time n+1 230 and the time n+2 240. In addition, an RU 223 of the time n 220 hops to RUs 232 and 242 at the time n+1 230 and the time n+2 240, respectively. If one terminal, when it performs initial transmission at an $n^{th}$ time index, is allocated three consecutive RUs, i.e. RUs 221, 222 and 223, positions of the RUs allocated at an $(n+1)^{th}$ time index in the H-ARQ process are equal to reference numerals 231, 233 and 232, and positions of the RUs allocated at an $(n+2)^{th}$ time index are equal to reference numerals 243, 241 and 242. As a result, if one packet was transmitted three times at $n^{th}$, $(n+1)^{th}$ and $(n+2)^{th}$ time indexes of the H-ARQ process, the frequency bands over which the corresponding packet was actually transmitted are scattered over the entire band, so the terminal can obtain frequency diversity.

However, in the SC-FDMA multiple access system or the OFDM system in which an allocation of consecutive frequency resources is required, the frequency resources allocated to one terminal should always continue in order to maintain a low Peak to Average Power Ratio (PAPR), and this characteristic should be maintained in the same way even when hopping is performed at retransmission. Therefore, it is not possible to employ the pattern in which hopping happens independently for each individual RU as described in FIG. 2.

WO 98/43378 describes a method to provide for sufficient resource hopping in a communication system or group of communication systems supporting a plurality of communication units, where different communication units may have varying resource requirements. The method includes the steps of: assigning a communication unit of the plurality of communication units to a resource slot within a level of a plurality of levels of a hierarchical representation of a resource region, assigning an available resource hopping pattern and associated initial resource location with a resource slot to the communication unit and hopping by the communication unit in accordance with a predetermined hierarchical resource hopping scheme.

It is the object of the present invention to provide an improved method for allocating frequency resources to multiple terminals and for hopping the blocks allocated as frequency resources.

This object is solved by the subject matter of the independent claims.

Preferred embodiments are defined by the dependent claims.

## SUMMARY OF THE INVENTION

Accordingly, there is a need for a new hopping pattern that guarantees the transmission of consecutive frequency bands even at retransmission, and prevents collision from happening during hopping even when the frequency bands allocated to individual terminals are different in size.

An aspect of the present invention is to address at least the problems and/or disadvantages described herein and to provide at least the advantages described below. Accordingly, an aspect of the present invention is to provide a frequency resource allocation method for providing stable frequency diversity in an FDM-based wireless communication system, and a transmission/reception method and apparatus using the same.

Another aspect of the present invention is to provide a frequency resource allocation method for providing stable frequency diversity in an FDM-based wireless communication system, and a transmission/reception method and apparatus using the same.

Another aspect of the present invention is to provide a frequency resource allocation method for providing efficient hopping according to transmission time in an FDM-based wireless communication system, and a transmission/reception method and apparatus using the same.

Another aspect of the present invention is to provide a frequency resource allocation method for maintaining continuity of frequency resources allocated to individual terminals while preventing collision between terminals, allocated frequency bands of which are different in size, when frequency resources are hopped at every transmission time in an FDM-based wireless communication system, and a transmission/reception method and apparatus using the same.

According to one aspect of the present invention, there is provided a method for allocating frequency resources to be used for multiple terminals in a Frequency Division Multiplexing (FDM) wireless communication system in which a base station communicates with the multiple terminals in a predetermined service frequency band. The method includes performing at a first transmission time a process of hierarchizing a series of resource units constituting the service frequency band in a plurality of levels, hierarchically dividing the series of resource units into blocks including at least one consecutive resource unit in each of the levels, and allocating some of the hierarchically divided blocks as frequency resources for each of the terminals; and performing, at a second transmission time following the first transmission time, a process of hierarchically hopping the blocks allocated as the frequency resources for each of the terminals so that the blocks each have a different frequency band from a frequency band used at the first transmission time, and allocating the hopped blocks as frequency resources for each of the terminals.

According to another aspect of the present invention, there is provided a method for allocating frequency resources to be used for multiple terminals in a Frequency Division Multiplexing (FDM) wireless communication system in which a base station communicates with the multiple terminals in a predetermined service frequency band. The method includes performing at a first transmission time a process of; hierarchizing a series of resource units constituting the service frequency band in a plurality of levels, hierarchically dividing the series of resource units into blocks including at least one consecutive resource unit in each of levels in a first group of an uppermost level up to a predetermined level among the levels, allocating some of the hierarchically divided blocks as frequency resources for each of predetermined terminals among the multiple terminals, and allocating resource units included in remaining blocks except for the blocks allocated to the predetermined terminals among the multiple terminals as shared frequency resources for remaining terminals except for the predetermined terminals among the multiple terminals, in each of levels in a second group, except for the levels in the first group among the levels; and performing, at a second transmission time following the first transmission time, a process of hierarchically hopping the blocks allocated as the frequency resources for each of the terminals so that the blocks each have a different frequency band from a frequency band used at the first transmission time, and allocating the hopped blocks as frequency resources for each of the terminals.

Preferably, in the above frequency resource allocation methods, the blocks divided in a same level among the levels in the first group can be identical to each other in a number of resource units included therein.

Preferably, the blocks divided in at least one of the levels in the first group can be different from each other in a number of resource units included therein.

Preferably, the blocks divided in a same level among the levels in the first group can be different from each other in a number of resource units included therein.

Preferably, an operation of allocating frequency resources for each of the terminals at the second transmission time can be performed by hierarchical hopping based on different hopping patterns previously given to the terminals.

Preferably, an interval between the first transmission time and the second transmission time can be in units of Hybrid Automatic Repeat reQuest (H-ARQ) Round Trip Times (RTTs).

Preferably, an interval between the first transmission time and the second transmission time can be in units of subframes.

According to further another aspect of the present invention, there is provided a method for transmitting data in a Frequency Division Multiplexing (FDM) wireless communication system in which a base station communicates with multiple terminals in a predetermined service frequency band. The method includes generating a data symbol; decoding frequency resource allocation information from received control information; and mapping the data symbol to the frequency resource allocation information and outputting transmission data. The frequency resource allocation information is information provided for performing at a first transmission time a process of hierarchizing a series of resource units constituting the service frequency band in a plurality of levels, hierarchically dividing the series of resource units into blocks including at least one consecutive resource unit in each of the levels, and allocating some of the hierarchically divided blocks as frequency resources for each of the multiple terminals; and performing, at a second transmission time following the first transmission time, a process of hierarchically hopping the blocks allocated as the frequency resources for each of the terminals so that the blocks each have a different frequency band from a frequency band used at the first transmission time, and allocating the hopped blocks as frequency resources for each of the terminals.

According to yet another aspect of the present invention, there is provided a method for transmitting data in a Frequency Division Multiplexing (FDM) wireless communication system in which a base station communicates with multiple terminals in a predetermined service frequency band. The method includes generating a data symbol; decoding frequency resource allocation information from received control information; and mapping the data symbol to the frequency resource allocation information and outputting transmission data. The frequency resource allocation information is information provided for performing at a first transmission time a process of hierarchizing a series of resource units constituting the service frequency band in a plurality of levels, hierarchically dividing the series of resource units into blocks including at least one consecutive resource unit in each of levels in a first group of an uppermost level up to a predetermined level among the levels, allocating some of the hierarchically divided blocks as frequency resources for each of predetermined terminals among the multiple terminals, and allocating resource units included in remaining blocks except for the blocks allocated to the predetermined terminals among the multiple terminals as shared frequency resources for remaining terminals except for the predetermined terminals among the multiple terminals, in each of levels in a second group, except for the levels in the first group among the levels; and performing, at a second transmission time following the first transmission time, a process of hierarchically hopping the blocks allocated as the frequency resources for each of the terminals so that the blocks each have a different frequency band from a frequency band used at the first transmission time, and allocating the hopped blocks as frequency resources for each of the terminals.

Preferably, in the above data transmission methods, the blocks divided in a same level among the levels can be identical to each other in a number of resource units included therein.

Preferably, the blocks divided in at least one of the levels can be different from each other in a number of resource units included therein.

Preferably, the blocks divided in a same level among the levels can be different from each other in a number of resource units included therein.

Preferably, an operation of allocating frequency resources for each of the terminals at the second transmission time can be performed by hierarchical hopping based on different hopping patterns previously given to the terminals.

Preferably, an interval between the first transmission time and the second transmission time can be in units of Hybrid Automatic Repeat reQuest (H-ARQ) Round Trip Times (RTTs).

Preferably, an interval between the first transmission time and the second transmission time can be in units of subframes.

According to still another aspect of the present invention, there is provided an apparatus for transmitting data in a Frequency Division Multiplexing (FDM) wireless communication system in which a base station communicates with multiple terminals in a predetermined service frequency band. The apparatus includes a generator for generating a data symbol; a decoder for decoding frequency resource allocation information from received control information; and a mapper for mapping the data symbol to the frequency resource allocation information and outputting transmission data. The frequency resource allocation information is information provided for performing at a first transmission time a process of hierarchizing a series of resource units constituting the service frequency band in a plurality of levels, hierarchically dividing the series of resource units into blocks including at least one consecutive resource unit in each of the levels, and allocating some of the hierarchically divided blocks as frequency resources for each of the multiple terminals; and performing, at a second transmission time following the first transmission time, a process of hierarchically hopping the blocks allocated as the frequency resources for each of the terminals so that the blocks each have a different frequency band from a frequency band used at the first transmission time, and allocating the hopped blocks as frequency resources for each of the terminals.

According to still another aspect of the present invention, there is provided an apparatus for transmitting data in a Frequency Division Multiplexing (FDM) wireless communication system in which a base station communicates with multiple terminals in a predetermined service frequency band, the apparatus includes a generator for generating a data symbol; a decoder for decoding frequency resource allocation information from received control information; and a mapper for mapping the data symbol to the frequency resource allocation information and outputting transmission data. The frequency resource allocation information is information provided for performing at a first transmission time a process of hierarchizing a series of resource units constituting the service frequency band in a plurality of levels, hierarchically dividing the series of resource units into blocks including at least one consecutive resource unit in each of levels in a first group of an uppermost level up to a predetermined level among the levels, allocating some of the hierarchically divided blocks as frequency resources for each of predetermined terminals among the multiple terminals, and allocating resource units included in remaining blocks except for the blocks allocated to the predetermined terminals among the multiple terminals as shared frequency resources for remaining terminals except for the predetermined terminals among the multiple terminals, in each of levels in a second group, except for the levels in the first group among the levels; and performing, at a second transmission time following the first transmission time, a process of hierarchically hopping the blocks allocated as the frequency resources for each of the terminals so that the blocks each have a different frequency band from a frequency band used at the first transmission time, and allocating the hopped blocks as frequency resources for each of the terminals.

Preferably, in the above data transmission apparatuses, the blocks divided in a same level among the levels can be identical to each other in a number of resource units included therein.

Preferably, the blocks divided in at least one of the levels can be different from each other in a number of resource units included therein.

Preferably, the blocks divided in a same level among the levels can be different from each other in a number of resource units included therein.

Preferably, an operation of allocating frequency resources for each of the terminals at the second transmission time can be performed by hierarchical hopping based on different hopping patterns previously given to the terminals.

Preferably, an interval between the first transmission time and the second transmission time can be in units of Hybrid Automatic Repeat reQuest (H-ARQ) Round Trip Times (RTTs).

Preferably, an interval between the first transmission time and the second transmission time can be in units of subframes.

## BRIEF DESCRIPTION OF THE DRAWINGS

The above and other aspects, features and advantages of the present invention will become more apparent from the following detailed description when taken in conjunction with the accompanying drawings in which:

FIG. 1 is a diagram illustrating a hopping operation for a frequency band in a wireless communication system using the conventional H-ARQ;
FIG. 2 is a diagram illustrating an example of a hopping operation during H-ARQ retransmission in the conventional OFDM system;
FIG. 3A is a diagram illustrating a node tree structure for frequency resource allocation in a wireless communication system according to Embodiment 1 of the present invention;
FIG. 3B is a diagram illustrating an allocation example of frequency resources in a wireless communication system according to an embodiment of the present invention;
FIG. 4 is a diagram illustrating a hopping process for hierarchical allocation of frequency resources in a wireless communication system according to an embodiment of the present invention;
FIG. 5 is a diagram illustrating a node tree structure for frequency resource allocation in a wireless communication system according to another embodiment of the present invention;
FIG. 6 is a diagram illustrating a hopping process for hierarchical allocation of frequency resources in a wireless communication system according to yet another embodiment of the present invention;

FIG. 7 is a diagram illustrating a node tree structure for frequency resource allocation in a wireless communication system according to still another embodiment of the present invention;

FIG. 8 is a diagram illustrating a hopping process for hierarchical allocation of frequency resources in a wireless communication system according to the present invention;

FIG. 9A is a diagram illustrating a node tree structure for frequency resource allocation in a wireless communication system according to another embodiment of the present invention;

FIG. 9B is a diagram illustrating an allocation example of frequency resources in a wireless communication system according to Embodiment 5 of the present invention;

FIG. 10 is a diagram illustrating a hopping process for hierarchical allocation of frequency resources in a wireless communication system according to the present invention;

FIG. 11 is a block diagram illustrating a structure of a transmitter of a mobile terminal to which a frequency resource allocation method according to an embodiment of the present invention is applied;

FIG. 12 is a block diagram illustrating a structure of a receiver of a base station to which a frequency resource allocation method according to an embodiment of the present invention is applied;

FIG. 13 is a flowchart illustrating a transmission operation of a mobile terminal to which a frequency resource allocation method according to an embodiment of the present invention is applied;

FIG. 14 is a flowchart illustrating a transmission operation of a base station to which a frequency resource allocation method according to an embodiment of the present invention is applied;

FIG. 15 is a flowchart illustrating a process in which a mobile terminal updates indexes of frequency resources by performing hopping beginning from an upper level according to another embodiment of the present invention;

FIG. 16 is a flowchart illustrating a transmission operation of a base station to which a frequency resource allocation method according to an embodiment of the present invention is applied;

FIG. 17 is a flowchart illustrating a process in which a base station modifies a node tree structure according to a frequency resource allocation method according to an embodiment of the present invention and a terminal performs hierarchical hopping according to the modified node tree structure; and

FIGs. 18A and 18B are diagrams illustrating node tree structures for frequency resource allocation in a wireless communication system according to still another embodiment of the present invention.

## DETAILED DESCRIPTION OF THE PREFERRED EMBODIMENTS

Preferred embodiments of the present invention will now be described in detail with reference to the annexed drawings. In the following description, a detailed description of known functions and configurations incorporated herein has been omitted for clarity and conciseness.

A brief description will now be made of the basic conditions of the system to which the present invention is applicable. Although the present invention can be applied to both the downlink (DL) and the uplink (UL), for example purposes, it will be assumed herein that the present invention is applied to the UL, for convenience. The present invention provides a frequency resource allocation scheme for obtaining frequency diversity in an FDM system, and a scheme of transmitting/receiving data according to the frequency resource allocation scheme. The frequency resource allocation scheme of the present invention, described below, will be defined herein as 'hierarchical hopping' scheme or 'hierarchical frequency resource allocation' scheme. The term 'hierarchical' as used herein refers to a process of hierarchizing a series of Resource Units (RUs) constituting a service frequency band in a plurality of levels, and dividing the RUs into blocks including at least one consecutive RU to allocate frequency resources of terminals in the levels. The present invention can be applied to, for example, an SC-FDMA wireless communication system supporting H-ARQ technology. Specifically, the present invention can be applied to both Synchronous H-ARQ and Asynchronous H-ARQ.

A brief description will now be made of the basic concept of the present invention, and embodiments proposed herein.

The basic concept of the present invention will first be described. In the present invention, frequency resource allocation is achieved based on a tree structure composed of nodes. For a terminal allocated frequency resources, one node is determined. In this node tree structure, upper/lower positions of the nodes are defined in levels. In the node tree, each node expresses logical frequency resources, and frequency resources of nodes belonging to a lower level are included in frequency resources of a node belonging to their upper level. Therefore, a size of frequency resources available in one node increases as the node goes to upper levels, and available frequency resources of the node belonging to the uppermost level are identical to the entire frequency band.

When the node tree structure is used, in order to obtain frequency diversity, nodes hop allocated frequency resources according to a predetermined pattern at an arbitrary transmission time. The hopping is performed independently for the individual levels of the nodes, and a scope of the frequency band where hopping happens independently for individual levels covers the frequency resources allocated to a node of the right upper level of the corresponding node.

The frequency resources to be finally allocated can be determined by performing a hopping operation from an upper level through the level including an allocated node based on the hierarchically of the node tree structure.

In the tree structure, because nodes of different levels mean different consecutive frequency resources, for example, because the nodes can guarantee a low PAPR in the SC-FDMA system and the hopping operation is limited within the frequency resources belonging to a node of their right upper level, collision with the frequency resources allocated to another terminal does not happen during the hopping operation at an arbitrary transmission time. In addition, according to the present invention, because the frequency resources actually allocated by a hierarchical hopping operation in the upper levels are uniformly distributed over the entire frequency band, frequency diversity gain can be efficiently obtained.

Embodiments proposed in the present invention will now be described. Embodiment 1 of the present invention provides a node tree structure that can provide stable frequency diversity when an FDM-based wireless communication system allocates frequency resources, and also provides a method of hierarchical hopping allocated frequency resources according to a transmission time of an H-ARQ process in uplink transmission. Embodiment 2 provides general formulae for allocation of frequency resources in a faired node tree structure like that in Embodiment 1. In a faired node tree structure, the number of lower nodes of nodes belonging to each level and the number of frequency resources per node in nodes of the same level are both the same.

Embodiment 3, a special case of Embodiment 1 or Embodiment 2, provides a common hopping pattern according to the number of nodes belonging to nodes of the same upper level, and Embodiment 4, a modification of Embodiment 1, provides a hierarchical hopping method for the resources allocated using a node tree in which the number of frequency resources belonging to nodes of the same level is different. Embodiment 5 provides a hierarchical hopping method that can also be applied to an unfairednode tree in which the number of lower nodes of nodes belonging to each level and the number of frequency resources per node in nodes of the same level are both different. Finally, Embodiment 6 provides a hierarchical hopping method of using a modified node tree, which is a resource allocation tree for allowing nodes of the same level to actually share frequency resources in a particular or below.

According to Embodiment 1 through Embodiment 5 of the present invention, in an Orthogonal Frequency Division Multiplexing (OFDM) wireless communication system in which a base station communicates with multiple terminals in a predetermined service frequency band, an operation of allocating frequency resources to be used for the terminals is performed in the following order.

A first process of hierarchizing a series of Resource Units (RUs) constituting the service frequency band in a plurality of levels, hierarchically dividing the RUs into blocks including at least one consecutive RU in each of the levels, and allocating some of the hierarchically divided blocks as frequency resources for each of the terminals, is performed at a first transmission time.

A second process of hierarchically hopping the blocks allocated as the frequency resources for each of the terminals so that the blocks each have a different frequency band from a frequency band used at the first transmission time, and allocating the hopped blocks as frequency resources for each of the terminals, is performed at a second transmission time following the first transmission time.

According to Embodiment 6 of the present invention, in an OFDM wireless communication system in which a base station communicates with multiple terminals in a predetermined service frequency band, an operation of allocating frequency resources to be used for the terminals is performed in the following order.

A first process of hierarchizing a series of resource units constituting the service frequency band in a plurality of levels, hierarchically dividing the series of resource units into blocks including at least one consecutive resource unit in each of levels in a first group of an uppermost level up to a predetermined level among the levels, allocating some of the hierarchically divided blocks as frequency resources for each of predetermined terminals among the multiple terminals, and allocating resource units included in remaining blocks except for the blocks allocated to the predetermined terminals among the multiple terminals as shared frequency resources for remaining terminals except for the predetermined terminals among the multiple terminals, in each of levels in a second group, except for the levels in the first group among the levels, is performed at a first transmission time.

A second process of hierarchically hopping the blocks allocated as the frequency resources for each of the terminals so that the blocks each have a different frequency band from a frequency band used at the first transmission time, and allocating the hopped blocks as frequency resources for each of the terminals, is performed at a second transmission time following the first transmission time.

In the methods of allocating frequency resources according to the foregoing embodiments, the blocks divided in the same level among the multiple levels can be identical to each other in the number of RUs included therein (see Embodiments 1, 2 and 3).

The blocks divided in any one of the multiple levels can be different from each other in the number of RUs included therein (see Embodiment 4).

The blocks divided in the same level among the multiple levels can be different from each other in the number of RUs included therein (see Embodiment 5).

The operation of allocating frequency resources of the terminals at the second transmission time can be performed by hierarchical hopping based on different hopping patterns previously given to the terminals.

An interval between the first transmission time and the second transmission time can be in units of H-ARQ Round Trip Times (RTTs).

An interval between the first transmission time and the second transmission time can be in units of subframes.

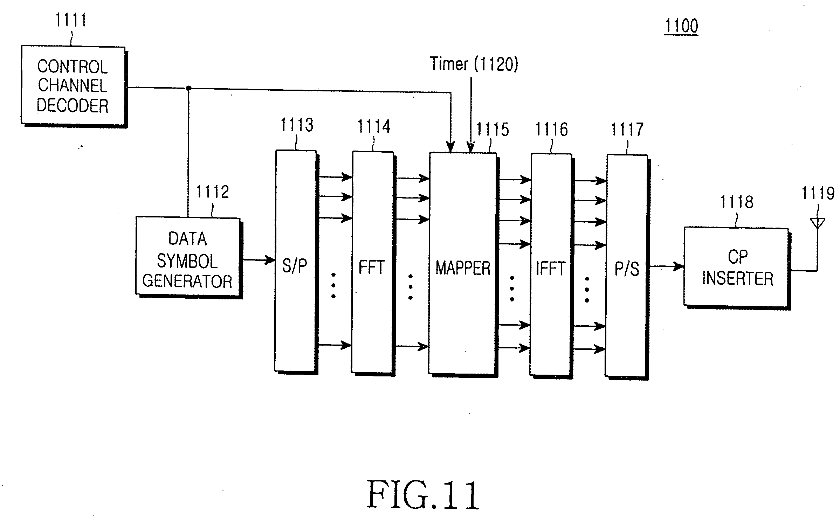

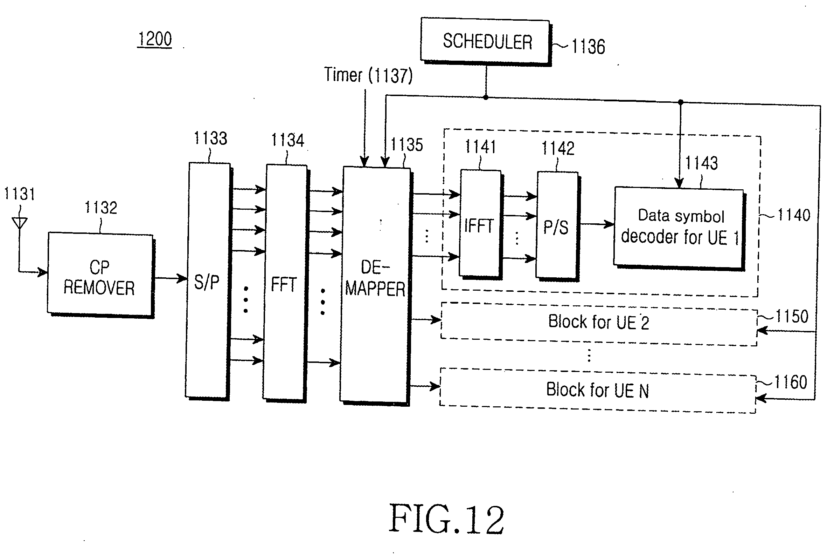

When the frequency resources are allocated according to the foregoing embodiments, a data transmission/reception operation can be performed at a mobile terminal transmitter and a base station receiver shown in FIGs. 11 and 12.

A detailed description will now be made of Embodiment 1 through Embodiment 6 of the present invention.

Embodiment 1

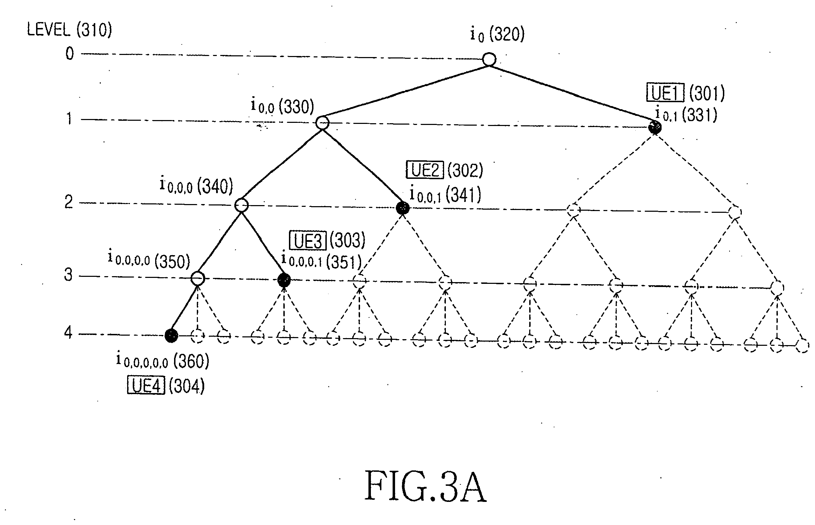

FIG. 3A illustrates: a node tree structure for frequency resource allocation in a wireless communication system according to Embodiment 1 of the present invention.

Assume that a basic unit of frequency resource allocation is an RU formed of a set of consecutive sub-carriers in a frequency band, and upper/lower positions of nodes in the tree structure of FIG. 3A are defined as levels 0 - 4 LEVEL 310. In FIG. 3A, when nodes belonging to the lowermost level 4 are identical to the basic frequency resource RU in the 5-level node tree, 8 nodes $i_{0,0,0,0}$, $i_{0,0,0,1}$, $i_{0,0,1,0}$, $i_{0,0,1,1}$, $i_{0,1,0,0}$, $i_{0,1,0,1}$, $i_{0,1,1,0}$, and $i_{0,1,1,1}$ belonging to the level 3 each correspond to 3 consecutive RUs; 4 nodes $i_{0,0,0}$, $i_{0,0,1}$, $i_{0,1,0}$, and $i_{0,1,1}$ belonging to the level 2 each correspond to 6 consecutive RUs; 2 nodes $i_{0,0}$, and $i_{0,1}$ belonging to the level 1 each correspond to 12 consecutive RUs; and finally, a node $i_0$ in the uppermost level 0 corresponds to 24 consecutive RUs, which are resources of the entire frequency band.

An index length of each node is 'index (1) of a level to which a corresponding node belongs' + 1, and includes all indexes in the upper level. In the node tree, because resources of lower nodes are a subset of their upper node, when resources of an upper node have already been allocated, resources of if its lower nodes cannot be separately allocated. In the resource allocation example of FIG. 3A, a node $i_{0,1}$ 331 of level 1 is allocated to a terminal, or a UE1 301, and another node $i_{0,0}$ 330 of level 1 is divided into lower nodes in level 2 and then, a node $i_{0,0,1}$ 341 is allocated to a UE2 302. Another node $i_{0,0,0}$ 340 of level 2, belonging to the node $i_{0,0}$ 330, is divided again into two lower nodes in level 3.

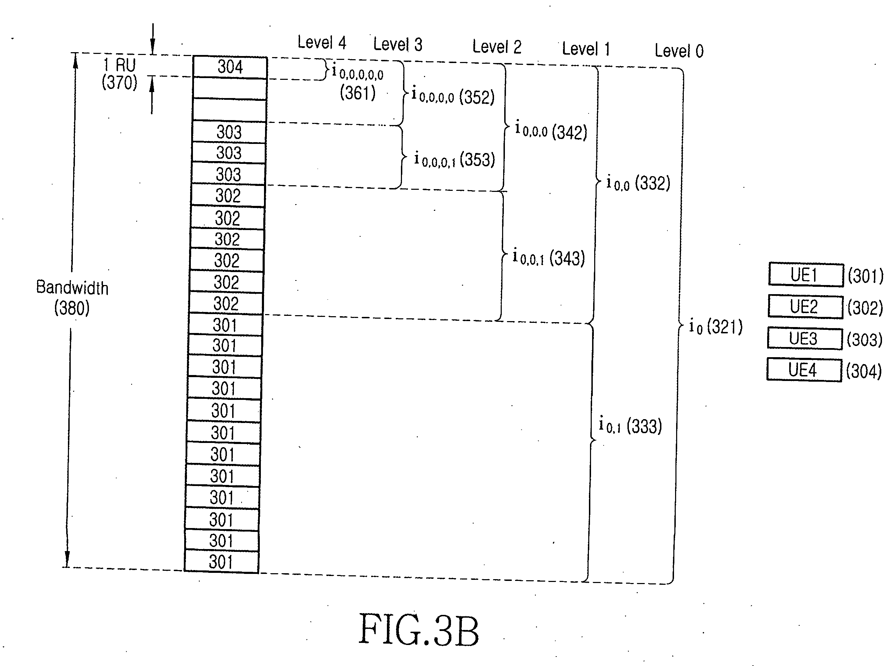

Of the two lower nodes, $i_{0,0,0,1}$ 351 is allocated to a UE3 303, and $i_{0,0,0,0}$ 350 is divided into 3 lower nodes in level 4, and $i_{0,0,0,0,0}$ 360, is allocated to a UE4 304. When resources of nodes are allocated with the tree structure in this manner, the frequency bands actually allocated are mapped as shown in FIG. 3B.

FIG. 3B illustrates an allocation example of frequency resources in a wireless communication system according to Embodiment 1 of the present invention.

All of the 24 RUs is identical to $i_0$ of the uppermost level, and each of two parts obtained by dividing the entire frequency band means frequency bands of $i_{0,0}$ 332 and $i_{0,1}$ 333 in level 1 of the node tree. That is, as the level steps down from the upper level to the lower level of the node tree, the broader frequency band is divided into more narrow frequency bands. As a result, in FIG. 3A, UE1 301 to UE4 304 are allocated $i_{0,1}$ 331, $i_{0,0,1}$ 341, $i_{0,0,0,1}$ 351, and $i_{0,0,0,0,0}$ 360 in the node tree, respectively, and these correspond to the actual frequency bands 333, 343, 353 and 361 of FIG. 3B, respectively.

A description will now be made of a method of hierarchically hopping allocated frequency resources at a transmission time of an H-ARQ process according to Embodiment 1 of the present invention on the assumption of the foregoing frequency allocation.

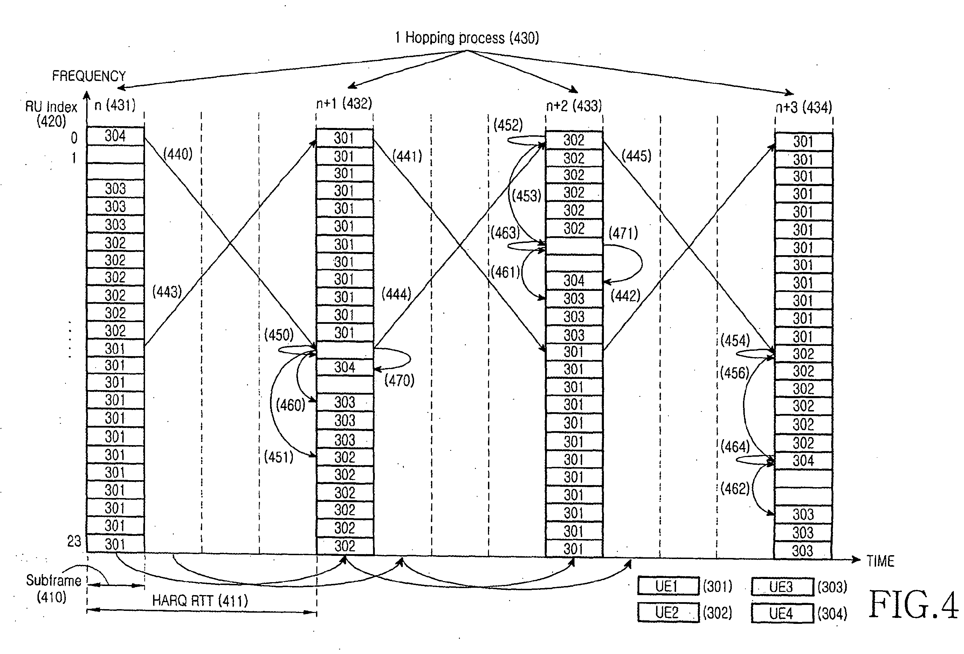

FIG. 4 illustrates a hopping process for the hierarchical allocation of frequency resources in a wireless communication system according to Embodiment 1 of the present invention.

Similarly to FIG. 1, the vertical axis indicates the frequency domain, and the horizontal axis indicates the time domain. In the time domain, a basic unit of a packet transmission is a subframe 410, and one H-ARQ RTT 411 is assumed to be a time of, for example, 4 subframes. In one hopping process 430 shown in FIG. 4, time indexes n 431, n+1 432, n+2 433 and n+3 434 are sequentially provided for the subframes over which the H-ARQ process is transmitted. In FIG. 4, for resource allocation to individual users, nodes are allocated to UE1 301 through UE 4 304 according to the manner described in FIGs. 3A and 3B, and time-based hopping patterns are defined for individual nodes of each level as shown in Equation (1). Nodes and their corresponding hopping patterns are identical in index.

$$S_{0,0}(n,n+1,n+2,n+3) = \{0,1,0,1\}, S_{0,1}(n,n+1,n+2,n+3) = \{1,0,1,0\}$$
$$S_{0,0,0}(n,n+1,n+2,n+3) = \{0,0,1,1\}, S_{0,0,1}(n,n+1,n+2,n+3) = \{1,1,0,0\}$$
$$S_{0,0,0,0}(n,n+1,n+2,n+3) = \{0,0,0,0\}, S_{0,0,0,1}(n,n+1,n+2,n+3) = \{1,1,1,1\}$$
$$S_{0,0,0,0,0}(n,n+1,n+2,n+3) = \{0,1,2,0\}$$

$$\ldots \ldots (1)$$

The hopping pattern of Equation (1) is previously given, or given by signaling between a terminal and a base station. The hopping pattern is repeated. A scope of each hopping index in the hopping pattern of Equation (1) begins at 0 ('number of nodes in a corresponding level' -1). To prevent collision between the allocated frequency resources, hopping indexes of several nodes belonging to one level at a particular time should not overlap with each other.

The hierarchical hopping provided in the present invention hierarchically performs hopping at each node from level 1 until the level in which the allocated nodes are included, and nodes in each level perform hopping within the resources belonging to the same upper node. A hopping operation in level 1 will be described with reference to FIG. 3A. Because the number of nodes belonging to level 1 is 2, hopping indexes 0 and 1 are possible, and the unit in which consecutive RUs are hopped is 12, or the number of RUs for each individual node. Hopping in level 2 is performed in units of 6 RUs within the resources of the upper node; hopping in level 3 is also performed in units of 3 RUs within the resources of the upper node; and hopping in level 4 is performed in units of 1 RU.

In FIG. 4, for UE1 301, only the hopping in level 1 needs to be considered, because UE1 301 is allocated the node $i_{0,1}$ 333 as shown in FIG. 3B. A hopping pattern of the corresponding node is defined as $S_{0,1}(n, n+1, n+2, n+3)$ ={1,0,1,0} in Equation (1), and in this embodiment, when 24 RUs are roughly divided into two parts, hopping indexes 0 and 1 mean 12 upper consecutive RUs and 12 lower consecutive RUs, respectively, as shown in FIG. 4. Reversely, the hopping indexes can also be set such that when 24 RUs are roughly divided into two parts, hopping indexes 0 and 1 mean 12 lower consecutive RUs and 12 upper consecutive RUs, respectively.

In this embodiment, a first RU index $a_1(t)$ of the frequency resource that UE1 301 is allocated at each time is expressed as Equation (2). In Equation (2), for t = n or n+2, 12 lower RUs with an RU index 420 = 12 - 23 are used because a value of a hopping index $S_{0,1}(t)$ is 1, and for t = n+1 and n+3, 12 upper RUs with an RU index = 0 - 11 are used because a value of the hopping index $S_{0,1}(t)$ is 0. In FIG. 4, as a result, hopping of UE1 301 is performed in the order of reference numerals 443 → 441 → 442.

$$a_1(t) = 12 * S_{0,1}(t) \quad \ldots \ldots \ldots (2)$$

In FIG. 4, for UE2 302, hopping in level 1 and hopping in level 2 should be considered in sequence because UE2 302 is allocated a node $i_{0,0,1}$ of level 2 as shown in FIG. 3B. In a hopping pattern of an upper node $i_{0,0}$ of $i_{0,0,1}$ in the level 1, for t = n and n+2, 12 RUs with an RU index = 0 - 11 are used because a value of the hopping index is 0, in opposition to that of UE1 301, and for t = n+1 and n+3, 12 RUs with an RU index = 12 - 23 are used because a value of the hopping index is 1. Further, in FIG. 4, hopping of UE2 302 in level 1 is performed in the order of reference numerals 440 → 444 → 445. Hopping of UE2 302 in the level 2 operates within 12 RUs determined by the level 1 at the corresponding time. Referring to Equation (1), because a hopping pattern of the corresponding node $i_{0,0,1}$ is {1,1,0,0}, this means that 6 lower RUs among 12 RUs are used at a time of n and n+1, and 6 upper RUs are used at a time of n+2 and n+3. In FIG. 4, for the frequency band hopped at the node $i_{0,0,1}$ at a time n+1, hopping 440 of level 1 and hopping 451 of level 2 are performed hierarchically. In the same manner, 2-level hopping of level 1 and level 2 at times n+2 and n+3 is performed in the order of reference numerals 444 → 452, and reference numerals 445 → 454, respectively. A first RU index $a_2(t)$ allocated to UE2 302 at an arbitrary time t belonging to the hopping process taking into account the hopping of both level 1 and level 2 can be defined as Equation (3). Because the total number of RUs allocated to UE2 302 is 6, 6 consecutive resources beginning from the first RU index calculated in Equation (3) are the entire frequency resources allocated to UE2 302 at time t.

$$a_2(t) = 12 * S_{0,0}(t) + 6 * S_{0,0,1}(t) \quad \ldots \ldots \ldots (3)$$

In FIG. 4, for the UE3 303 allocated a node $i_{0,0,0,1}$ of level 3 as shown in FIG. 3B, hopping in level 1 through level 3 should be considered in sequence. Upper nodes of $i_{0,0,0,1}$ are $i_{0,0}$ in level 1 and $i_{0,0,0}$ in level 2. Hopping in level 1 has already been described, and for hopping in level 2, because a hopping pattern of the node $i_{0,0,0}$ is {0,0,1,1}, this means that 6 upper RUs among 12 RUs are used at a time of n and n+1, and 6 lower RUs are used at a time of n+2 and n+3. Hopping of level 3 within 6 RUs allocated up to level 2 is also performed according to a hopping pattern $S_{0,0,0,1}$(n, n+1, n+2, n+3) ={1,1,1,1} given by Equation (1). As a result, in FIG. 4, hierarchical hopping of UE3 303 at a time of n+1, n+2 and n+3 is performed in order of reference numerals 440 → 450 → 460, reference numerals 444 → 453 → 461, and reference numerals 445 → 456 → 462, respectively. A first RU index $a_3$(t) allocated to UE3 303 at an arbitrary time t taking into account hierarchical hopping of all level 1 through level 3 can be defined as Equation (4). The entire frequency resources allocated to UE3 303 are 3 consecutive RUs beginning from the first RU index calculated in Equation (4).

$$a_3(t) = 12 * S_{0,0}(t) + 6 * S_{0,0,0}(t) + 3 * S_{0,0,0,1}(t) \qquad \ldots \ldots \ldots (4)$$

In FIG. 4, UE4 304, because it is allocated a node $i_{0,0,0,0,0}$ of level 4 as shown in FIG. 3B, is hopped according to $i_{0,0}$, $i_{0,0,0}$, $i_{0,0,0,0}$ in the upper levels of level 1 through level 3, respectively, and hopped according to $S_{0,0,0,0,0}$(n, n+1, n+2, n+3) ={0,1,2,0} in level 4 304. Because 3 nodes belong to one upper node in level 4 as shown in FIG. 3A, hopping indexes 0 through 2 are available.

In the same manner, in FIG. 4, hierarchical hopping of UE4 304 at a time of n+1, n+2 and n+3 is performed in order of reference numerals 440 → 450 → 450 → 470, reference numerals 444 → 453 → 463 → 471, and reference numerals 445 → 456 → 464 → 464, respectively. An RU index allocated to UE4 304 at an arbitrary time t taking into account hierarchical hopping of level 1 through level 4 can be defined as Equation (5). The frequency resource allocated to UE3 303 is the RU calculated in Equation (5).

$$a_4(t) = 12 * S_{0,0}(t) + 6 * S_{0,0,0}(t) + 3 * S_{0,0,0,0}(t) + S_{0,0,0,0,0}(t) \qquad \ldots$$

$$(5)$$

Although the hierarchical hopping operation of performing hopping in a downward order of the upper node to the lower node has been described in the foregoing embodiment, an actual hopping operation may perform hopping in an upward order of the lower node to the upper node. That is, Equation (2) through Equation (5) express a hopping operation over several levels at a time, and are commonly defined for the above two access approaches. In Equation (2) through Equation (5), two terms connected by addition are each an index value by hopping up to the level to which the node allocated in the level 1 belongs. Therefore, an operation of performing hierarchical hopping according to each level can be considered as an operation of updating an initial index value according to hopping of the corresponding level in the same manner. Although lower nodes have not been considered because $i_{0,1}$, $i_{0,0,1}$, $i_{0,0,0,1}$ are allocated to the UE1 301, UE2 302 and UE3 303, respectively, the lower nodes can be allocated to several UEs in the in the same manner and the foregoing hierarchical hopping operation can be applied thereto.

In Embodiment 1, a description has been made of the hierarchical hopping method proposed in the present invention when resources are allocated using the node tree where the number of lower nodes and the number of frequency resources per node are identical in nodes belonging to each level. When such a node tree is defined as a faired node tree, Embodiment 2 provides general formulae for allocating frequency resources in the faired node tree.

Embodiment 2

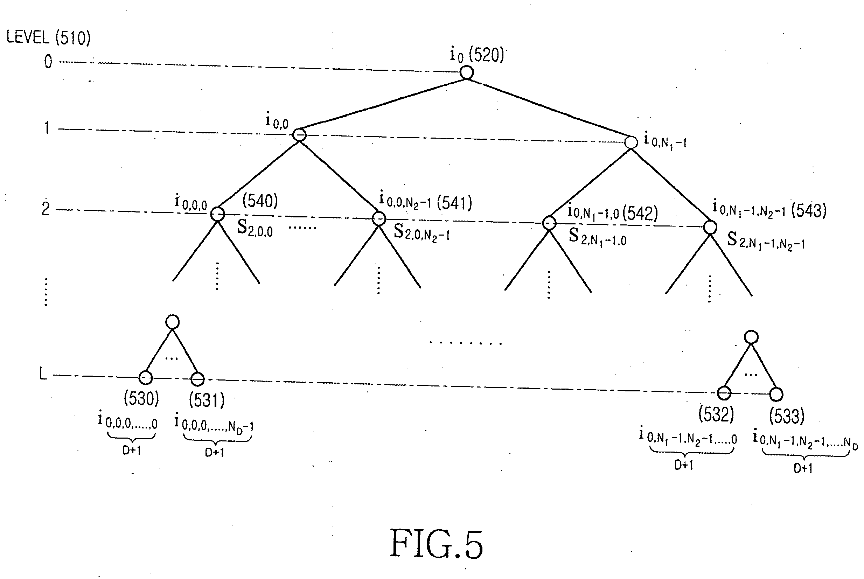

FIG. 5 illustrates a node tree structure for frequency resource allocation in a wireless communication system according to Embodiment 2 of the present invention.

Referring to FIG. 5, definitions will be given of general formulae for frequency allocation at an arbitrary time when the system allocates resources in a manner of the faired node tree and transmits data by hopping an allocated frequency band according to a given hopping pattern. As shown in FIG. 5, LEVEL 510 of the node tree are defined as levels 0 to L, the number of nodes belonging to nodes of the same upper level in an $l^{th}$ level (where $l$ is an integer between 0 and L) is defined as $N_1$, and the number of RUs belonging to one node in an 1th level is defined as $R_1$. According to the definition of the faired node tree, $N_1$ and $R_1$ are identical in the nodes belonging to a particular level, and for Embodiment 1, the $N_1$ and $R_1$ values in each level can be defined as Equation (6).

$$N_0 = 1, \ N_1 = 2, \ N_2 = 2, \ N_3 = 2, \ N_4 = 3,$$
$$R_0 = 24, \ R_1 = 12, \ R_2 = 6, \ R_3 = 3, \ R_4 = 1 \qquad \ldots \ldots \ldots \ldots (6)$$

As shown by reference numerals 520, 530-533, and 540-543 of FIG. 5, nodes in an $l^{th}$ level are expressed with $(l+1)$ indexes, including all node indexes in the upper and corresponding levels. Generally, to express the relationship with the upper levels in the node tree, $l^{th}$ and $(l+1)^{th}$ levels are defined as Equation (7), and the number $R_0$ of RUs belonging to the uppermost node is equal to the total number of RUs.

$$R_l = N_{l+1} * R_{l+1}, \text{ for } l = 0, \cdots, L-1$$
$$R_0 = \prod_{l=1}^{L} N_l \qquad \cdots\cdots\cdots (7)$$

Assume that a hopping pattern of an $n^{th}$ node in an $l^{th}$ level is given as $S_{l,n_{l-1},n_l}$, where $n_{l-1}$ denotes a node index in an upper $(l-1)^{th}$ level to which a corresponding node belongs, and $n_l$ denotes an index between nodes of an $l^{th}$ level belonging to the same upper node. Because hopping is performed among nodes belonging to the same upper node, possible values of the hopping indexes defined in $S_{l,n_{l-1},n_l}$ are $0 \sim N_l \sim 1$.

Hopping indexes of nodes $S_{l,n_{l-1},0} \sim S_{l,n_{l-1},N_l-1}$ that belong to the same upper node at the same time, i.e. nodes among which hopping is performed at the same time, should not be equal. If the hopping indexes are equal, a collision will occur. In the present invention, lengths of all hopping indexes are equal to M, for convenience, so that all hopping patterns with an arbitrary length satisfying the above characteristics can be applied. If an arbitrary node $i_{0,n_1,n_2,\cdots,n_l}$ belonging to an $1^{th}$ level is allocated, an index of a first RU allocated at an arbitrary time t is defined as Equation (8). Because the number of RUs belonging to a corresponding node is $R_1$, a set of indexes of the entire frequency resources, or RUs, allocated for data transmission can be defined as Equation (9).

$$a_{i_{0,n_1,n_2,\cdots,n_l}}(t) = \sum_{l=1}^{L} N_l * S_{0,\cdots,n_l}(t\%M) \qquad \cdots\cdots\cdots (8)$$

$$\left\{ a_{i_{0,n_1,n_2,\cdots,n_l}}(t), a_{i_{0,n_1,n_2,\cdots,n_l}}(t)+1, \cdots, a_{i_{0,n_1,n_2,\cdots,n_l}}(t)+R_l-1 \right\} \qquad \cdots\cdots\cdots (9)$$

In the foregoing description, a time index is a time sequence in a transmission time of the corresponding H-ARQ process. In Synchronous H-ARQ, because a transmission time the H-ARQ process is previously determined as H-ARQ RTT, an increase in the time index by 1 corresponds to as much subframe time as the number of H-ARQ RTTs in the actual time. In Asynchronous H-ARQ, because the next transmission time of one H-ARQ process is variably determined by scheduling, the time index increases when the corresponding process is actually allocated the time index. Although a hopping pattern based on the transmission time can be defined individually for each H-ARQ process in this manner, each H-ARQ process can define a hopping pattern according to a time index (number) of a subframe and calculate an allocation frequency using the hopping pattern in the corresponding subframe. When subframe numbers are given as 4*n, 4*(n+1), 4*(n+2) and 4*(n+3) at transmission times n, n+1, n+2 and n+3 of an H-ARQ process interested in Embodiment 1 and a length-16 hopping pattern is determined according to the time index (number) of each subframe, assume that each pattern used in Equation (1) is repeated 4 times as shown in Equation (10). In this case, Embodiment 1 and Embodiment 2 are actually equal in operation.

$$S_{0,0} = \{0,0,0,0,1,1,1,1,0,0,0,0,1,1,1,1\} \qquad \cdots\cdots\cdots (10)$$

A description has been made of the application of the present invention when a unit of hopping is subframe in Embodiment 2, and the unit of hopping can be extended to an arbitrary hopping interval. When basic hopping intervals of all users are assumed to be equal and a hopping pattern is defined in the corresponding interval, the hopping interval can be a long block, which is an output unit of a transmitting Inverse Fast Fourier Transformer (IFFT) in the SC-FDMA system, or can be a subframe unit or a retransmission unit. It is also possible to arbitrarily divide long blocks in one subframe into a plurality of groups and define a hopping interval for each individual group. In this case, the interval defined for each hopping is not always regular. To prevent collision between users, even though the basic hopping interval is determined to be equal for all users, the pattern is configured with the same indexes for each individual user as shown in Equation (10), making it possible to variably adjust the hopping interval on the actual resources.

Embodiment 3

Embodiment 1 or Embodiment 2, assuming the faired node tree, has independently defined $\{S_{l,n_{l-1},n_l}\}$, $n_l = 0,\cdots,N_{l-1}$ for each individual level, or according to an upper node belonging to the same level. Embodiment 3, a special case of Embodiment 1 or Embodiment 2, defines a common hopping pattern according to the number of nodes belonging to nodes of the same upper level. In Embodiment 1, because $N_1 = 2$ in levels 1 - 3 and $N_1 = 3$ in level 4, the definition given as Equation (1) is assumed to use a common pattern defined as Equation (11). That is, in levels 1, 2 and 3, a first node among lower nodes has a hopping pattern fixed to {0,1,0,1} and a second node has a hopping pattern fixed to {1,0,1,0}.

$$S_{0,0}(n,n+1,n+2,n+3) = S_{0,0,0} = S_{0,0,0,0} = \{0,1,0,1\},$$
$$S_{0,1}(n,n+1,n+2,n+3) = S_{0,0,1} = S_{0,0,0,1} = \{1,0,1,0\}, \quad \ldots\ldots\ldots (11)$$
$$S_{0,0,0,0,0}(n,n+1,n+2,n+3) = \{0,1,2,0\}$$

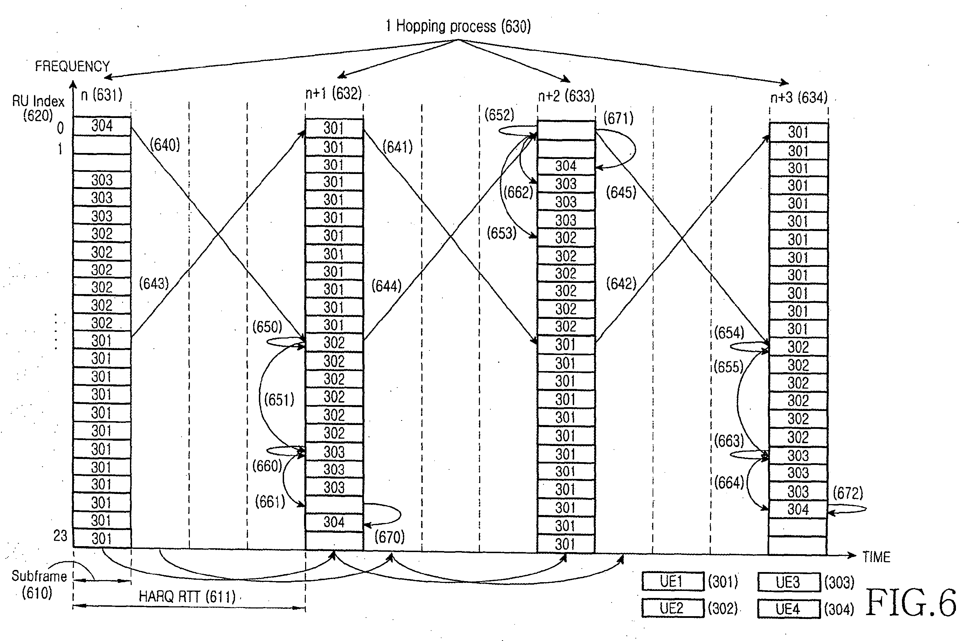

Contrary to the time-based hopping operation when the hopping pattern of Equation (1) is used, a hopping operation of FIG. 6 when a common hopping pattern of Equation (11) is used can be described.

That is, FIG. 6 illustrates a hopping process for hierarchical allocation of frequency resources in a wireless communication system according to Embodiment 3 of the present invention.

In FIG. 6, UE1 301, as it is allocated $i_{0,1}$ in level 1, hops as reference numeral 643 at a time n+1, and as reference numerals 641 and 642 at times n+2 and n+3, respectively, according to a pattern $S_{0,1}$. The resources that UE1 301 is allocated are 12 consecutive RUs beginning from an RU with an index defined as Equation (2) in Embodiment 1.

UE2 302, as it uses $S_{0,0}$ in level 1 and $S_{0,0,1}$ in level 2, performs hopping in the order of reference numerals 640 → 650 at a time n+1, and in the order of reference numerals 644 → 653 and reference numerals 645 → 654 at times n+2 and n+3, respectively, according to the patterns. The resources that UE2 302 is allocated are 6 consecutive RUs beginning from an RU with an index defined as Equation (2) in Embodiment 1.

UE3 303, as it uses $S_{0,0}$ in the level 1, $S_{0,0,0}$ in the level 2 and $S_{0,0,0,1}$ in the level 3, performs hopping in the order of reference numerals 640 → 651 → 660 at a time n+1, and in order of reference numerals 644 → 652 → 662 and reference numerals 645 → 655 → 663 at times n+2 and n+3, respectively, according to the hopping patterns of Equation (11). The resources that UE3 303 is allocated are 3 consecutive RUs beginning from an RU with an index defined as Equation (12) below.

$$a_3(t) = (12+6)*S_{0,0}(t) + 3*S_{0,0,0,1}(t) \quad \ldots\ldots\ldots (12)$$

The UE4 304, as it uses a hopping pattern $S_{0,0}$ in the level 1, a hopping pattern $S_{0,0,0}$ in the level 2, a hopping pattern $S_{0,0,0,0}$ in the level 3 and a hopping pattern $S_{0,0,0,0,0}$ in the level 4, performs hopping in order of reference numerals 640 → 651 → 661 → 670 at a time n+1, and in order of reference numerals 644 → 652 → 652 → 671 and reference numerals 645 → 655 → 664 → 672 at times n+2 and n+3, respectively, according to the hopping patterns of Equation (11). The resource that the UE4 304 is allocated is an RU with an index defined as Equation (13) below.

$$a_4(t) = (12+6+3)*S_{0,0}(t) + S_{0,0,0,0,0}(t) \quad \ldots\ldots\ldots (13)$$

When the common pattern is used for some nodes as described above, the common pattern should be previously defined, or determined through signaling between a terminal and a base station. Therefore, a decrease in the number of hopping patterns may decrease the system complexity.

Embodiment 4

Embodiment 4, a modification of Embodiment 1, provides a hierarchical hopping operation for the resources allocated using a node tree in which the number of frequency resources belonging to nodes of the same level is different.

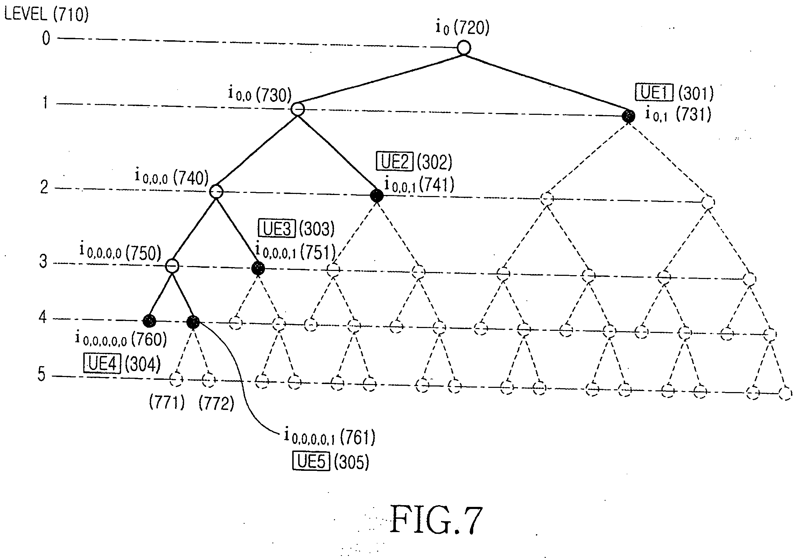

FIG. 7 illustrates a node tree structure for frequency resource allocation in a wireless communication system according to Embodiment 4 of the present invention.

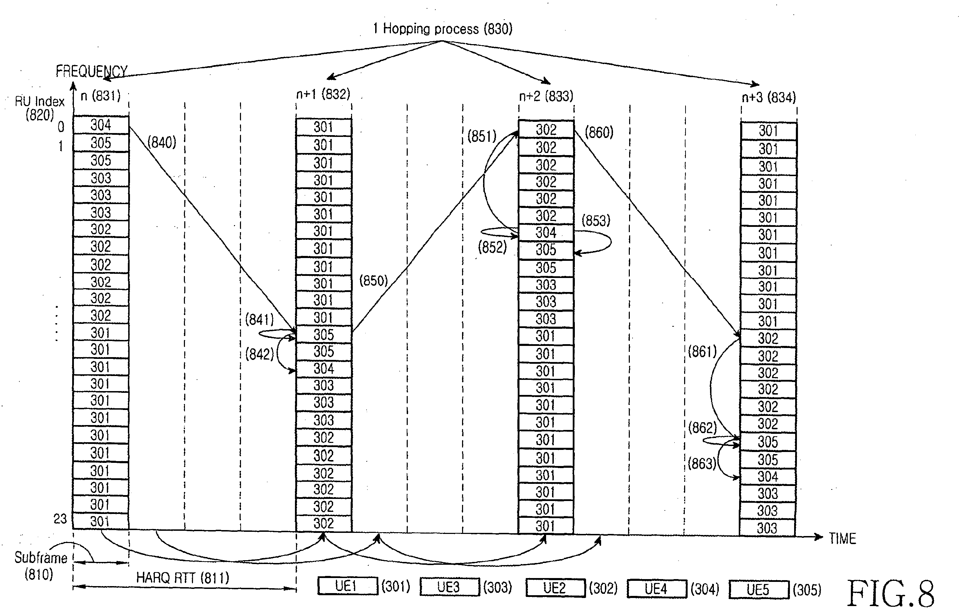

The node tree of FIG. 7 is equal to the node tree of Embodiment 1 described in FIG. 3A in levels 0 through 3. The difference is that the number $N_4$ of nodes belonging to the same upper node in level 4 decreases from 3 to 2, and the number of RUs belonging to nodes of level 4 is different for each individual node. The numbers of RUs in two nodes $i_{0,0,0,0,0}$ 760 and $i_{0,0,0,0,1}$ 761 belonging to the same upper node are $R_{4,0}=1$ and $R_{4,1}=2$, respectively. Because the operation difference between Embodiment 4 and Embodiment 1 is applied only to the UE4 304 and a UE5 305, which are allocated the nodes $i_{0,0,0,0,0}$ 760 and $i_{0,0,0,0,1}$ 761, an example of performing hopping according to patterns $S_{0,0,0,0,0}$ and $S_{0,0,0,0,1}$ defined in Equation (14) will be described for each case with reference to FIG. 8.

FIG. 8 illustrates a hopping process for hierarchical allocation of frequency resources in a wireless communication system according to Embodiment 4 of the present invention.

An operation of UE4 304 allocated a node $i_{0,0,0,0,0}$ 760 will first be described. For a hierarchical hopping operation, UE4 304 uses hopping patterns $i_{0,0}$, $i_{0,0,0}$ and $i_{0,0,0,0}$ described in Embodiment 1, in level 1 through level 3. The hopping operation of up to level 3 is performed in the same manner as the above-described hopping operation in Embodiment 1. When the hopping operation of level 4, defined in Equation (14), is also taken into consideration, the final hopping operation of UE4 304 at times n+1, n+2 and n+3 is performed in the order of reference numerals 840 → 841 → 841 → 842, reference numerals 850 → 851 → 852 → 852, and reference numerals 860 → 861 → 862 → 863, respectively. In the same manner, the final hopping operation that UE5 305 allocated a node $i_{0,0,0,0,1}$ 761 performs at times n+1, n+2 and n+3 is performed in the order of reference numerals 840 → 841 → 841 → 841, reference numerals 850 → 851 → 852 → 853, and reference numerals 860 → 861 → 862 → 862, respectively. In addition, first indexes of RUs that UE4 and UE5 are allocated at an arbitrary time t are defined as Equation (15). In this case, it should be noted that even though UE4 and UE5 are allocated nodes of the same level, because the number of RUs of each node is different, UE4 and UE5 should take into account the RUs included in the nodes of other levels when performing the hopping operation.

$$S_{0,0,0,0,0}(n, n+1, n+2, n+3) = \{0,1,0,1\}, S_{0,0,0,0,1}(n, n+1, n+2, n+3) = \{1,0,1,0\}$$

$$\cdots\cdots\cdots (14)$$

$$a_4(t) = 12 * S_{0,0}(t) + 6 * S_{0,0,0}(t) + 3 * S_{0,0,0,0}(t) + 2 * S_{0,0,0,0,0}(t)$$

$$a_5(t) = 12 * S_{0,0}(t) + 6 * S_{0,0,0}(t) + 3 * S_{0,0,0,0}(t) + 1 * S_{0,0,0,0,1}(t)$$

$$\cdots\cdots\cdots (15)$$

Although not described in this embodiment, as for the node $i_{0,0,0,0,1}$, because two RUs belong thereto, it is possible to divide this node into nodes 771 and 772 having lower nodes of level 5, the number of RUs of each of which is 1, and to allocate the nodes 771 and 772.

Embodiment 5

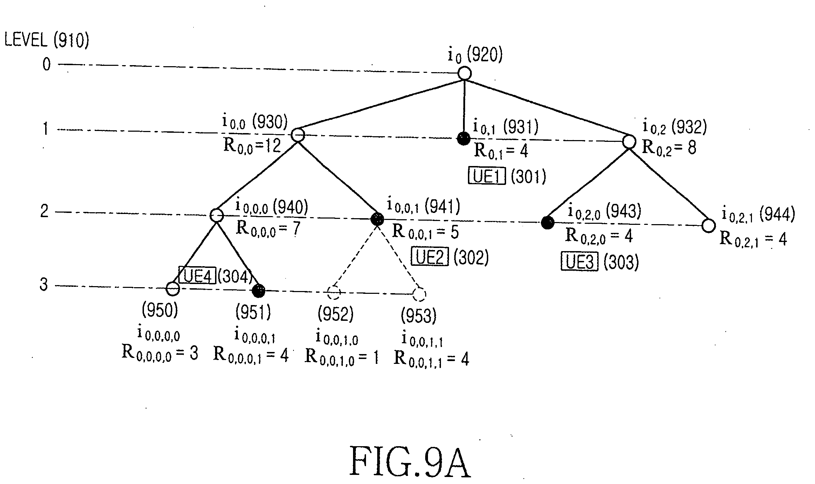

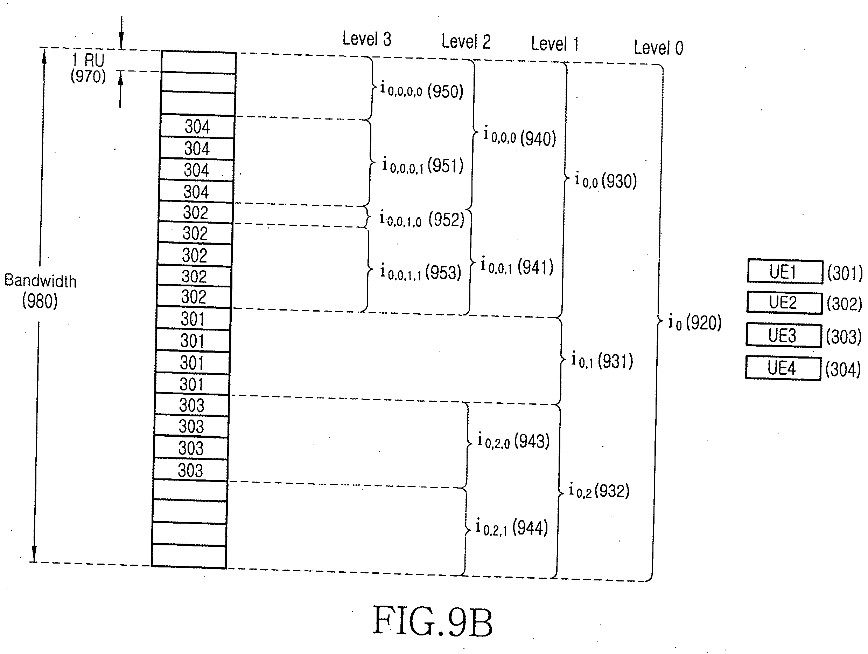

FIG. 9A illustrates a node tree structure for frequency resource allocation in a wireless communication system according to Embodiment 5 of the present invention, and FIG. 9B illustrates an allocation example of frequency resources in a wireless communication system according to Embodiment 5 of the present invention.

This embodiment can also be applied to an unfaired node tree in which the number of lower nodes of the node belonging to each level is different and the number of frequency resources per node in nodes of the same level is also different, as shown in FIG. 9A.

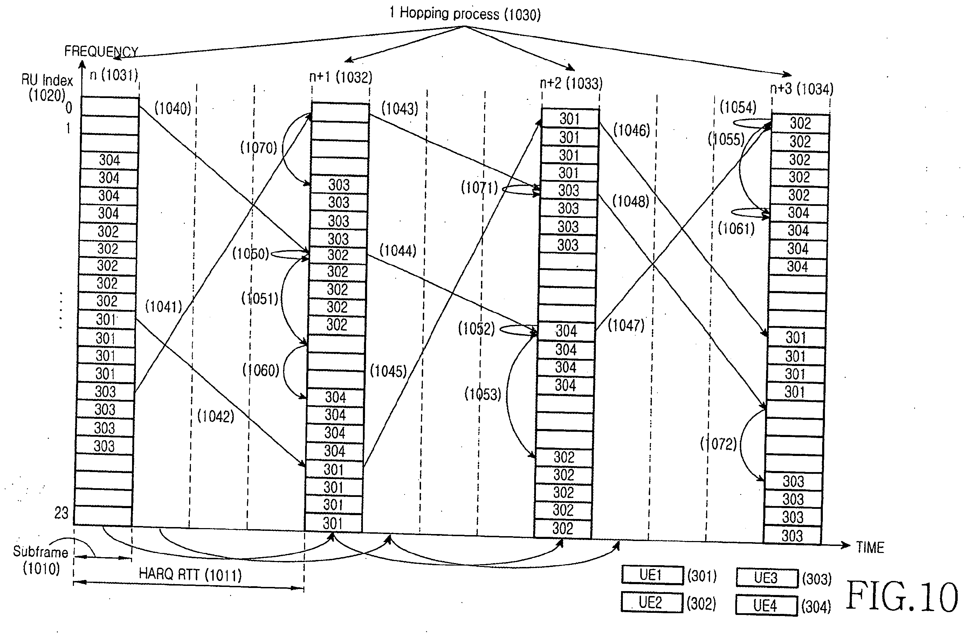

As shown in FIG. 9B, the frequency resources composed of a total of 24 RUs are divided in level 1 into three nodes $i_{0,0}$ 930, $i_{0,1}$ 931 and $i_{0,2}$ 932 that include 12, 4 and 8 RUs, respectively. The node $i_{0,1}$ 931 does not define its lower nodes, because it does not have nodes in its lower level. The node $i_{0,0}$ 930 is divided in level 2 into two nodes $i_{0,0,0}$ 940 and $i_{0,0,1}$ 941 that include 7 and 5 RUs, respectively. The node $i_{0,2}$ 932 is divided in level 2 into two nodes $i_{0,2,0}$ 943 and $i_{0,2,1}$ 944, both of which include 4 RUs. Definitions of only the nodes $i_{0,0,0}$ 940 and $i_{0,0,1}$ 941 among the nodes of level 2 are given in level 3. In this case, 7 RUs of $i_{0,0,0}$ 940 are divided into frequency resources $i_{0,0,0,0}$ 950 and $i_{0,0,0,1}$ 951 that include 3 and 4 RUs, respectively, and 5 RUs of $i_{0,0,1}$ 941 are divided into frequency resources $i_{0,0,1,0}$ 952 and $i_{0,0,1,1}$ 953 that include 1 and 4 RUs, respectively. In addition, as shown in FIG. 9A, among the above-described nodes, $i_{0,1}$ 931 is allocated to UE1 301, $i_{0,0,1}$ 941 is allocated to UE2 302, $i_{0,2,0}$ 943 is allocated to UE3 303, and $i_{0,0,0,1}$ 951 is allocated to UE4 304, respectively. Here, the frequency band that each node actually occupies in the frequency domain is as shown in FIG. 9B. The node indexes of FIG. 9A are mapped to the frequency resources of FIG. 9B on a one-to-one basis. Hopping patterns of the nodes to which UE1 through UE4 are allocated are defined as Equation (16), and frequency resources allocated at an arbitrary time will be described with reference to FIG. 10.

$$S_{0,0}(n, n+1, n+2, n+3) = \{0,1,2,0\}, S_{0,1} = \{1,2,0,1\}, S_{0,2} = \{2,0,1,2\}$$

$$S_{0,2,0}(n, n+1, n+2, n+3) = S_{0,2,0} = \{0,1,0,1\}, S_{0,0,1} = \{1,0,1,0\}$$

$$S_{0,0,0,0}(n, n+1, n+2, n+3) = \{0,0,1,1\}, S_{0,0,0,1} = \{1,1,0,0\}$$

$$\ldots\ldots\ldots (16)$$

FIG. 10 illustrates a hopping process for hierarchical allocation of frequency resources in a wireless communication system according to Embodiment 5 of the present invention.

As for UE1 301 allocated the node $i_{0,1}$ of level 1, because it needs to perform hopping only in level 1, a hopping operation at arbitrary times n+1,n+2 and n+3 is performed in order of reference numerals 1042, 1045 and 1046 of FIG. 10, respectively, according to the hopping pattern $S_{0,1}=\{1,2,0,1\}$. An index of a first RU that UE1 301 is allocated at an arbitrary time is defined as Equation (17). "a=arg{}", i.e. argument "a", defined in Equation (17) denotes an index of the node that is mapped to a previous frequency resource at the corresponding time. For example, when an hopping index $S_{0,1}(t)$ of UE1 301 is 0 at an arbitrary time t, because it is first allocated among the entire frequency resources, $a_1(t)=0$. If the hopping index $S_{0,1}(t)$ of UE1 301 is 1 and the hopping index $S_{0,0}(t)$ of the node $i_{0,0}$ is 0, because the next RUs will be allocated to UE1 after 12 ($R_{0,0}$) RUs are first allocated to the node, $a_1(t)=12$ according to Equation (17). If the hopping index $S_{0,1}(t)$ of UE1 is 2, because RUs will be allocated to UE1 after RUs are first allocated to the nodes $i_{0,0}$ and $i_{0,1}$, $a_1(t)=12+8=20$ according to Equation (17). When the number of RUs allocated in each node of level 1 is identical, calculation is possible only with the number of common RUs and hopping indexes. However, when the numbers of RUs allocated to three nodes are different as in this embodiment, it is not possible to know how many leading frequency resources will be allocated, so there is a need for Equation (17).

$$a_1(t) = \sum_{k=0}^{S_{0,1}(t)} k * R_{0,a}, \quad a = \arg_k\{S_{0,k}(t) = k\} \quad \ldots\ldots\ldots (17)$$

UE2 302 hierarchically performs hopping of a node $i_{0,0}$ in level 1 and hopping of a node $i_{0,0,1}$ in level 2. Referring to the hopping patterns $S_{0,0}=\{0,1,2,0\}$ and $S_{0,0,1}=\{1,0,1,0\}$ defined in Equation (16), a hopping operation at arbitrary times n+1, n+2 and n+3 is performed in the order of reference numerals 1040 → 1050, reference numerals 1044 → 1053 and reference numerals 1047 → 1054 of FIG. 10, respectively. Here, an index of a first RU that UE2 302 is allocated at an arbitrary time is defined as Equation (18). Argument "a" defined in Equation (18), like in the case of UE1 301, denotes an index of the node which is mapped to the previous frequency resource according to hopping of level 1. The entire formula has been completed taking into account the 7 RUs of an adjacent node $i_{0,0,0}$, hopping of which is performed in level 2.

$$a_2(t) = \sum_{k=0}^{S_{0,0}(t)} k * R_{0,a} + S_{0,0,1} * 7, \quad a = \arg_k\{S_{0,k}(t) = k\} \quad \ldots\ldots\ldots (18)$$

UE3 303 hierarchically performs hopping of a node $i_{0,2}$ in level 1 and hopping of a node $i_{0,2,0}$ in level 2. Referring to the hopping patterns $S_{0,2}=\{2,0,1,2\}$ and $S_{0,2,0}=\{0,1,0,1\}$ defined in Equation (16), a hopping operation at arbitrary times n+1, n+2 and n+3 is performed in the order of reference numerals 1041 → 1070, reference numerals 1043 → 1071 and reference numerals 1048 → 1072 of FIG. 10, respectively. An index of the first RU that UE3 303 is allocated at an arbitrary time is defined as Equation (19). Argument "a" defined in Equation (19) denotes an index of the node that is mapped to the previous frequency resource according to hopping of level 1. The entire formula has been completed taking into account the 4 RUs of an adjacent node $i_{0,2,1}$, hopping of which is performed in level 2.

$$a_3(t) = \sum_{k=0}^{S_{0,2}(t)} k * R_{0,a} + S_{0,2,0} * 4, \quad a = \arg_k\{S_{0,k}(t) = k\} \quad \ldots\ldots\ldots (19)$$

UE4 304 hierarchically performs hopping of a node $i_{0,0}$ in level 1, hopping of a node $i_{0,0,0}$ in level 2, and hopping of a node $i_{0,0,0,1}$ in level 3. Referring to the hopping patterns $S_{0,0}=\{0,1,2,0\}$, $S_{0,0,0}=\{0,1,0,2\}$ and $S_{0,0,0,1}=\{1,1,0,0\}$ defined in Equation (16), a hopping operation at arbitrary times n+1, n+2 and n+3 is performed in the order of reference numerals 1040 → 1051 → 1060, reference numerals 1044 → 1052 → 1052, and reference numerals 1047 → 1055 → 1061 of FIG. 10, respectively. An index of the first RU that UE4 304 is allocated at an arbitrary time is defined as Equation (20). Argument "a" defined in Equation (20) denotes an index of the node that is mapped to the previous frequency resource according to hopping of level 1. Also, hopping in level 2 and hopping in level 3 are considered in Equation (20).

$$a_4(t) = \sum_{k=0}^{S_{0,0}(t)} k * R_{0,a} + S_{0,0,0} * 5 + S_{0,0,0,1} * 3, \quad a = \arg_k\{S_{0,k}(t) = k\}$$

$$(20)$$

### Embodiment 6

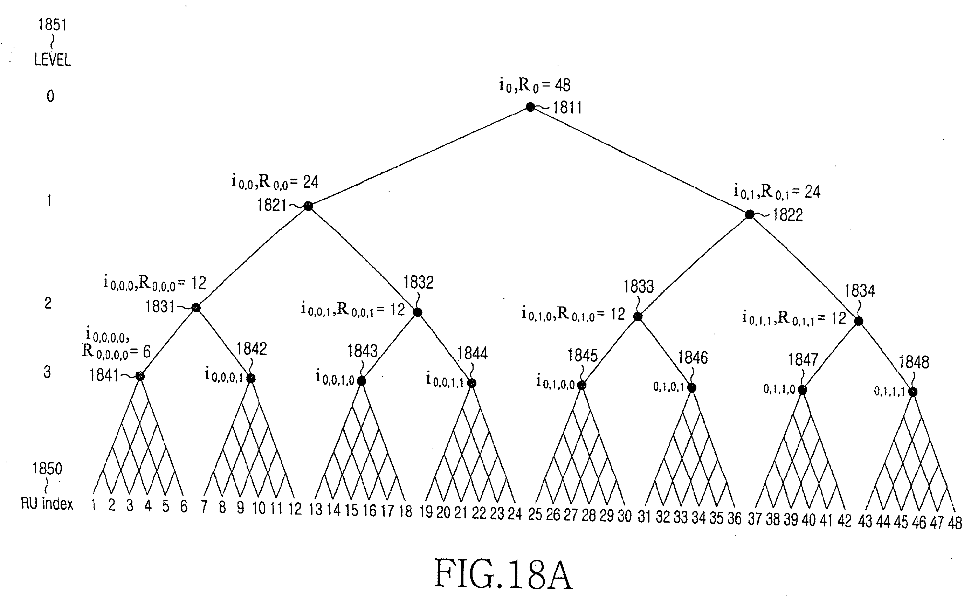

The node tree structures in Embodiment 1 through Embodiment 5 are based on the conditions that frequency resources are basically not shared in the same level. When these are called basic node trees, frequency resources included in the nodes in the same level are independent without overlapping in the basic node trees described in FIGs. 3A, 5, 7 and 9A. By the benefit of the exclusive frequency resource structure between nodes in such basic node trees, hopping between nodes can be simply defined without resource collision. Because resource allocation is performed in the manner of signaling one-node index information, there is a limitation in allocating resources over multiple nodes. For example, referring to node 940 of level 2 in FIG. 9A, when node 940 is allocated, 7 RUs of nodes 950 and 951 (i.e. 3 RUs for node 950 and 4 RUs for node 951) belonging to node 940 are all allocated. Alternatively, it is also possible to allocate 3 or 4 consecutive RUs by allocating nodes 950 and 951, but other possible allocations will be limited.
When a resource allocation tree for allowing nodes of the same level to actually share frequency resources in a specific level or below as shown in FIG. 18A in order to solve the existing node tree scheduling restriction is called a 'modified node tree', a description will now be made of Embodiment 6 of the present invention, which applies hierarchical hopping using the modified node tree.

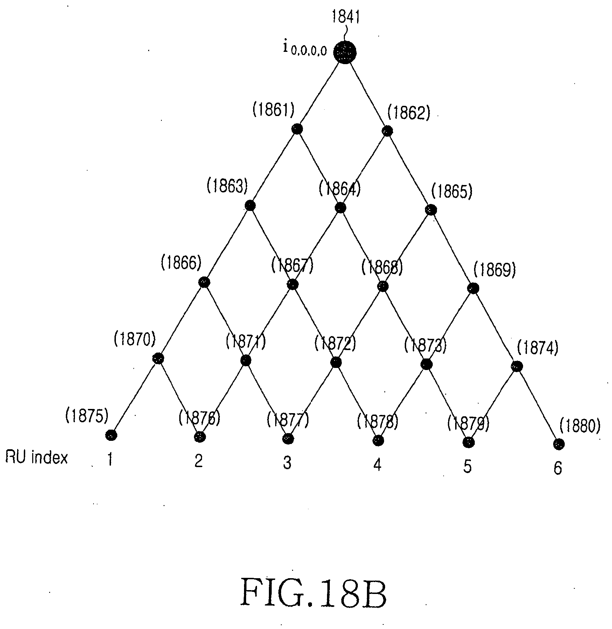

FIGs. 18A and 18B illustrate node tree structures for frequency resource allocation in a wireless communication system according to Embodiment 6 of the present invention.
In the modified node tree of FIG. 18A, which is equal in structure to the basic node tree in levels 0, 1, 2 and 3, frequency resources included in nodes in the same level do not overlap each other, but multiple nodes in levels lower than level 3 can share the same RUs. In FIG. 18A, reference numeral 1850 means RU indexes and reference numeral 1851 means levels of nodes.
In FIG. 18A, nodes of level 3 are indicated by reference numerals 1841 through 1848, and the number of resources for each node of level 3 is 6. A detailed description will be made of lower nodes of the reference numeral 1841 among them. As shown in FIG. 18B, reference numerals 1861 and 1862 each indicate nodes capable of allocating 5 consecutive RUs, and RU1 through RU5 and RU2 through RU6 can be allocated through the nodes 1861 and 1862, respectively. Reference numerals 1863 through 1865 each can allocate 4 consecutive RUs, and include RU1 through RU4, RU2 through RU5, and RU3 through RU6 as their allocable RUs, respectively.
In the same manner, reference numerals 1866 through 1869 each indicate nodes capable of allocating 3 consecutive RUs; reference numerals 1870 through 1874 each indicate nodes capable of allocating 2 consecutive RUs; and reference numerals 1875 through 1880 in the lowest level mean RU1 through RU6, respectively. When the allocable nodes share the frequency resources in the modified node tree of Embodiment 6 to increase scheduling freedom, the same resources cannot be repeatedly allocated to several users during actual resource allocation. For example, if node 1863 is already allocated, only nodes 1874, 1879 and 1880 not including the resources RU1 through RU4 belonging to node 1863 can be allocated to other users.
It can be noted that the hierarchical hopping method provided by this embodiment of the present invention can be applied to any node tree structure.

### Modified Embodiment

The detailed hopping technologies based on the foregoing embodiments can be applied on the assumption that the resource tree structure and the hopping pattern for each individual node are predetermined in the actual cellular system. The node tree structure and hopping pattern can be predefined according to a unique characteristic of each individual cell such as a Cell Identifier (ID). As an example of efficiently modifying the node tree according to a configuration of each cell or a time-varying intra-cell loading situation, there is a possible method of predefining a plurality of node trees and signaling information on the node tree structure and the hopping pattern in use, by exchanging control signaling between a base station and a terminal periodically or when necessary.

Transceiver Apparatus

With reference to FIG. 11, a description will now be made of structures of a base station and a terminal to which the present invention is applied in, for example, the uplink SC-FDMA system.

FIG. 11 illustrates a structure of a transmitter 1100 of a mobile terminal to which a frequency resource allocation method according to an embodiment of the present invention is applied.

In FIG. 11, a control channel decoder 1111 demodulates (decodes) a control information channel of an uplink, received over a downlink at a previous slot, and outputs allocation information of frequency resources allocated to a corresponding terminal and control information necessary for data generation. The frequency resource allocation information means nodes and their associated signaling in the node tree structures described in the foregoing embodiments. The frequency resource allocation information can include information on the amount of allocated frequency resources and information on the hopping pattern to be used. The information on the hopping pattern can be signaled between the terminal and the base station, or can be predefined.

A data symbol generator 1112 generates an appropriate number of uplink data symbols based on the control information and outputs the uplink data symbols to a Serial-to-Parallel (S/P) converter 1113. The S/P converter 1113 converts the serial input data symbols into parallel signals, and outputs the parallel signals to a Fast Fourier Transform (FFT) processor 1114. The FFT processor 1114 transforms the input parallel signals into frequency-domain signals. A size of the FFT processor 1114 is equivalent to the number of data symbols generated in the data symbol generator 1112.

Output signals of the FFT processor 1114 are mapped to frequency resources actually allocated to the corresponding terminal in a mapper 1115, and the allocation of the frequency resources is achieved using the uplink control information demodulated by the control channel decoder 1111. The mapper 1115 can calculate an RU index allocated at a corresponding time using received time information 1120. The time information 1120 can be a time index counted independently for each hopping process like in Embodiment 1, or can be a subframe index described in Embodiment 2. Herein, the time information 1120 can be provided by a counter of the terminal or the base station by counting a time index or a subframe number (index) individually for each hopping process.

Output signals of the mapper 1115 are transformed into time-domain signals in an Inverse Fast Fourier Transform (IFFT) processor 1116, and a size of the IFFT processor 1116 is equivalent to the total number of sub-carriers, including in a guard interval. The parallel time-domain signals are converted into signal signals by a Parallel-to-Serial (P/S) converter 1117, and then input to a Cyclic Prefix (CP) inserter 1118. The CP inserter 1118 inserts a guard interval in the transmission signal, and the guard interval signal uses, for example, a CP that repeats a part of an input signal. The CP-inserted transmission signal is transmitted over a wireless channel via an antenna 1119.

This structure of generating data symbols in the time domain, transforming the time-domain signals into frequency-domain signals through the FFT processor, mapping the frequency-domain signals to specific frequency resources, transforming the mapped signals back into time-domain signals through the IFFT processor, and then transmitting the signals, is the basic transmitter structure of the SC-FDMA system.

FIG. 12 illustrates a structure of a receiver 1200 of a base station to which a frequency resource allocation method according to an embodiment of the present invention is applied.

In FIG. 12, a guard interval signal is removed by a CP remover 1132 from a signal received via an antenna(s) 1131, and then converted into parallel signals in an S/P converter 1133. Output signals of the S/P converter 1133 are transformed into frequency-domain signals through an FFT processor 1134, and output signals of the FFT processor 1134 are separated into received signals for individual terminals by a demapper 1135.

In performing an operation of the demapper 1135, a scheduler 1136 provides frequency resource allocation information for each individual terminal, determined in the uplink, and time information 1137. The base station, with use of an undepicted transmitter, transmits control information including the frequency resource allocation information provided by the scheduler 1136, over a control channel of the downlink. The resource allocation information and the time information can be generated based on the resource allocation method and the hopping method described in any one of the foregoing embodiments. The time information 1137 can be provided by a counter of the terminal or the base station by counting a time index or a subframe index individually for each hopping process.

The demapper 1135 performs an inverse operation of the mapper 1115 described in FIG. 11. Therefore, the signals separated in the demapper 1135 are input to data symbol decoding blocks 1140, 1150, ⋯, 1160 for individual terminals.

In FIG. 12, the data symbol decoding block 1140 for a UE1 is equal in structure to the data symbol decoding blocks 1150, ⋯, 1160 for the other UE2 ~ UEN. The data symbol decoding block 1140 includes an IFFT processor 1141, a P/S converter 1142 and a data symbol decoder 1143. The IFFT processor 1141 transforms the received signal corresponding to the UE1 into a time-domain signal, and the P/S converter 1142 converts the parallel time-domain signal into a serial signal. The data symbol decoder 1143 demodulates the received signal for the corresponding terminal.

Frequency Resource Allocation and Hopping Operation

A description will now be made of operations of a mobile terminal and a base station for performing frequency resource allocation and hopping operation according to an embodiment of the present invention in uplink transmission.

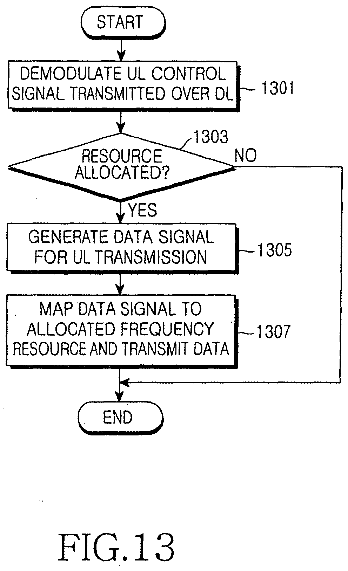

FIG. 13 illustrates a transmission operation of a mobile terminal to which is applied a frequency resource allocation method according to an embodiment of the present invention.

In step 1301, the terminal receives and demodulates a control information channel of an uplink over a downlink, and outputs allocation information of frequency resources allocated to the corresponding terminal, and control information necessary for data generation. The frequency resource allocation information means nodes and their associated signaling in the node tree structures described in the foregoing embodiments. Thereafter, based on the control information, the terminal determines in step 1303 whether frequency resources for uplink transmission have been allocated to the corresponding terminal at a corresponding time. If there are resources allocated to the corresponding terminal, the terminal generates, in step 1305, symbols of a data channel for uplink transmission. In step 1307, the terminal maps the data symbols to the allocated frequency resources, transforms the mapped signal into a time-domain signal, and transmits the time-domain signal. However, if it is determined in step 1303 that there is no resource allocated to the corresponding terminal, the terminal immediately ends the transmission operation.

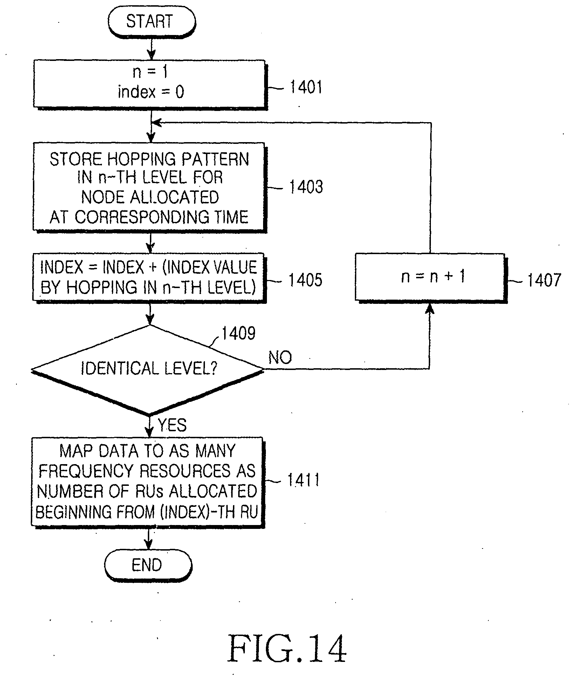

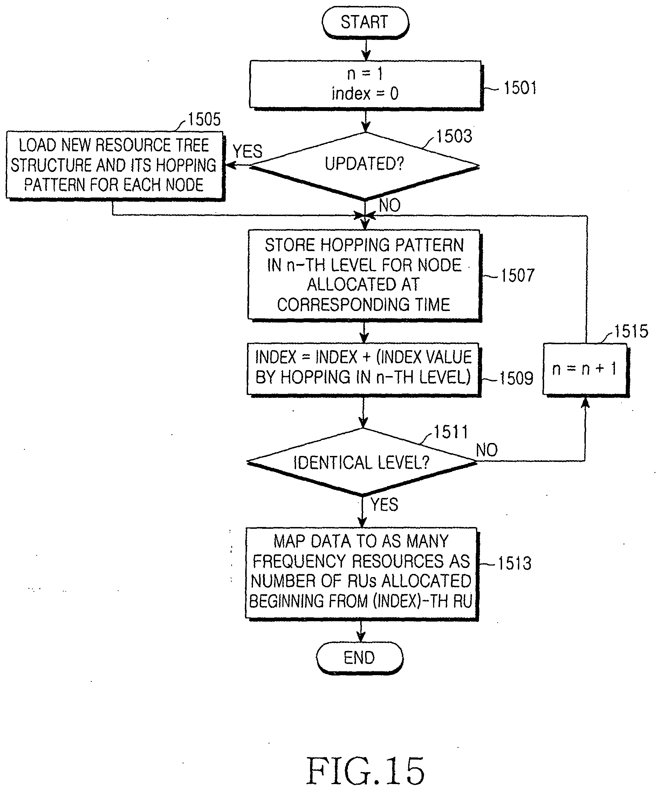

With reference to FIGs. 14 and 15, a detailed description will now be made of a procedure for allocating data symbols to the frequency resources allocated for actual data transmission using the frequency resource allocation information signaled in step 1307 by the terminal and a time index (or subframe index) of the corresponding time.

FIG. 14 illustrates a process in which a mobile terminal updates indexes of frequency resources by performing hopping from an upper level according to an embodiment of the present invention.

In step 1401, the terminal initializes a level index 'n' and a resource index 'index'. In step 1403, the terminal stores a hopping pattern for the node that it is allocated at the corresponding time. The corresponding hopping pattern is a given pattern that is transmitted to the terminal together with the uplink control information, or is a previously signaled pattern. In step 1405, the terminal updates an index of frequency resource taking into account hopping in an nth level. The operation of steps 1403 and 1405 is repeatedly performed for each level to perform a hierarchical hopping operation according to the present invention.

Thereafter, if the current level index 'n' is equal in step 1409 to the level to which the allocated node belongs, the terminal proceeds to step 1411, and if the current level index 'n' is less than the level to which the allocated node belongs, the terminal goes to step 1407 where it hierarchically performs hopping in the next level. The updating process of step 1405 for each level sequentially expresses the addition of terms, for example, in Equation (5). In step 1411, the terminal maps transmission data to as many frequency resources as the number of RUs allocated, beginning from the RU with an initial index of the allocated resource, calculated through hierarchical hopping according to the present invention.

FIG. 15 illustrates a process in which a mobile terminal updates indexes of frequency resources by performing hopping beginning from an upper level according to another embodiment of the present invention.

In step 1501, the terminal initializes a level index 'n' and a resource index 'index'. The terminal determines in step 1503 whether there is any change in the resource tree structure for resource allocation at the current time. Because the resource tree structure used can be selected from among several resource tree structures according to characteristic or conditions of each cell, the terminal can perform a hopping operation according to the currently used resource tree structure and its associated hopping pattern. Here, control information including resource tree structure information can be transmitted through periodic signaling, or can be transmitted from the base station when needed. If it is determined in step 1503 that there is a change in the resource tree structure, the terminal loads in step 1505 a new resource tree structure and a hopping pattern for each individual node in the new resource tree structure, and then proceeds to step 1507. However, if there is no change in the resource tree structure, the terminal directly proceeds to step 1507 without performing step 1505. In the latter case, the terminal can intactly apply the previously used hopping pattern. An operation of steps 1507 through 1513 of FIG. 15 is equal to the operation of steps 1403 through 1411 of FIG. 14, so a detailed description thereof will be omitted herein.

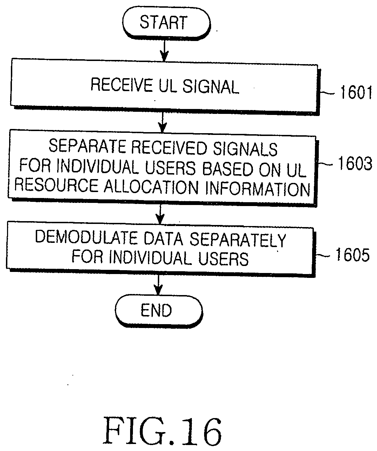

FIG. 16 illustrates a transmission operation of a base station to which a frequency resource allocation method according to an embodiment of the present invention is applied.

In FIG. 16, the base station first generates a control information channel of an uplink, including uplink resource allocation information and control information necessary for data generation, and transmits the control information channel over a downlink. Thereafter, the base station receives an uplink signal transmitted by a terminal in step 1601, and separates in step 1603 the received uplink signal into received signals for individual terminals based on the uplink resource allocation information. In step 1603, the base station uses the procedure of searching for actual frequency resources allocated for individual terminals at the corresponding time like in FIG. 13. In step 1605, the base station performs data demodulation for each individual terminal using the received signals for individual terminals, separated in step 1603, and then ends the reception operation.

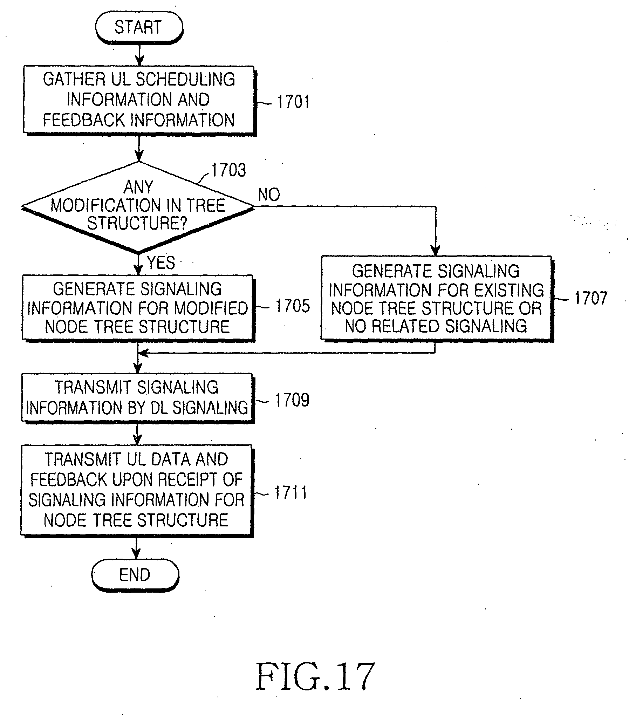

FIG. 17 illustrates a process in which a base station modifies a node tree structure according to a frequency resource allocation method according to an embodiment of the present invention and a terminal performs hierarchical hopping according to the modified node tree structure.

The base station gathers all of the up-to-now uplink scheduling information and feedback/request information in step 1701, and determines in step 1703 whether to modify the node tree structure. If the base station needs to modify the node tree structure, it generates signaling information for the modified node tree structure in step 1705, and this information is transmitted through periodic signaling, or is transmitted over the downlink when necessary. If it is determined in step 1703 that there is no need to modify the node tree structure, the base station proceeds to step 1707 where it generates signaling information for the previous node tree structure, or omits generation of the related signaling information. The signaling information for the node tree structure in step 1705 or 1707 is transmitted by downlink signaling in step 1709 together with other signaling information, and based on this, the terminal receives, in step 1711, signaling for the node tree structure and transmits uplink data and feedback using the received signaling. The base station and the terminal select an appropriate node tree by periodically performing the foregoing procedure, thereby facilitating efficient system operation.

It is noted that the hierarchical hopping method provided by the present invention can be applied not only to the SC-FDMA multiple access system, but also to the OFDM system in which allocation of consecutive frequency resources is needed. This frequency resource allocation operation by the present invention is achieved by hierarchically hopping frequency resources at arbitrary transmission times. An interval between hopping operations, i.e. an interval between transmission times, can be in units of long blocks, which are units of outputs of a transmitting IFFT for, for example, the SC-FDMA system. As another example, the interval can be in units of subframes in an H-ARQ process, or units of RTTs, which are units of retransmissions. Alternatively, when long blocks in an arbitrary subframe are divided into several groups, the interval can be in units of the groups.

As is apparent from the foregoing description, according to the present invention, the FDM-based wireless communication system can allocate frequency resources so as to provide stable frequency diversity.

In addition, the FDM-based wireless communication system can prevent collision between terminals having different sizes of frequency bands allocated when hopping frequency resources during every transmission, and can also maintain continuity of frequency resources allocated for each individual terminal.

Further, the wireless communication system can select an appropriate resource allocation scheme from among various frequency resource allocation schemes according to characteristics or conditions of each cell when hopping frequency resources, thereby facilitating efficient management of the frequency resources.

While the invention has been shown and described with reference to a certain preferred embodiment thereof, it will be understood by those skilled in the art that various changes in form and details may be made therein without departing from the scope of the invention as defined by the appended claims.

## Claims

1. A method for allocating frequency resources (370) to be used for multiple terminals in a Frequency Division Multiplexing, FDM, wireless communication system in which a base station (1200) communicates with the multiple terminals (1100) in a service frequency band, the method comprising:

    dividing, according to a node tree structure comprising several levels, a series of resource units formed of a set of consecutive sub-carriers in the service frequency band into blocks (332, 333, 342, 343, 352, 353) of consecutive resource units corresponding to respective nodes of the node tree structure at each level, wherein each node expresses logical frequency resources and frequency resources of nodes belonging to a lower level (342, 343) are included in frequency resources of a node belonging to their upper level (332), and allocating each of the terminals (331, 341, 351, 360) one of the nodes (301, 302, 303, 304) as a frequency resource without collisions between terminals, at a first transmission time (431); and

    hopping (440-471) the blocks allocated as the frequency resources for each of the terminals so that the blocks each have a different frequency resource from frequency resources used at a first transmission time, wherein the hopping is performed hierarchically at each node corresponding to a first level , wherein a zero level corresponds to entire resources of the service frequency band, until levels to which each node corresponding to the first level belongs among the several levels, and wherein nodes in each level perform hopping within frequency resources belonging to the same upper node of each level, and allocating the hopped blocks as frequency resources for each of the terminals at a second transmission time (432),

    wherein the blocks in at least one of the levels are different from each other (760, 761) in a number of resource units included therein,

    wherein frequency bands allocated to individual terminals are different in size.

**2.** The method of claim 1, wherein the blocks in each of the several levels are different from each other in a number of resource units included therein.

**3.** The method of claim 1, wherein an operation of allocating frequency resources for each of the terminals at the second transmission time is performed by hopping based on hopping patterns previously transmitted to the terminals.

**4.** The method of claim 1, wherein the step of dividing comprises dividing the series of resource units into blocks of consecutive resource units in each level of a first group of levels of an uppermost level up to a predetermined level, and wherein the step of allocating comprises allocating each of predetermined terminals among the multiple terminals one of the blocks as an exclusive frequency resource, and allocating resource units included in the remaining blocks, not allocated to the predetermined terminals as frequency resources for remaining terminals among the multiple terminals, in each of levels in a second group, excluding the levels in the first group.

**5.** The method of claim 4, wherein blocks in a same level among the several levels in the first group are identical to each other in a number of resource units included therein.

**6.** The method of claim 4, wherein blocks in each level of the several levels in the first group are different from each other in a number of resource units included therein.

**7.** An apparatus for transmitting data in a Frequency Division Multiplexing, FDM, wireless communication system in which a base station (1200) communicates with multiple terminals (1100) in a service frequency band, the apparatus comprising:

  a generator (1112) for generating a data symbol;
  a decoder (1111) for decoding frequency resource allocation information from received control information; and
  a mapper (1115) for mapping the data symbol to frequency resources obtained from the decoded frequency resource allocation information and outputting transmission data;
  wherein the frequency resource allocation information comprises information about blocks of frequency resources allocated without collisions between terminals to each of the multiple terminals at a first transmission time, comprising nodes and their associated signaling in a node tree structure comprising several levels, wherein each node expresses logical frequency resources, and frequency resources of nodes belonging to a lower level are included in frequency resources of a node belonging to their upper level, and information for the frequency resources for each of the multiple terminals allocated at a second transmission time,
  wherein the blocks corresponding to respective nodes of the node tree structure are formed by dividing, according to the node tree structure, a series of resource units formed of a set of consecutive sub-carriers in the service frequency band into blocks (332, 333, 342, 343, 352, 353) of consecutive resource units at each level,
  wherein the blocks in at least one of the levels of the node tree structure are different from each other in a number of resource units included therein,
  wherein the frequency bands allocated to individual terminals are different in size.

**8.** The apparatus of claim 7, wherein the blocks in each of the several levels are different from each other in a number of resource units included therein.

**9.** The apparatus of claim 7, wherein an operation of allocating frequency resources for each of the terminals at the second transmission time is performed by hopping based on hopping patterns previously transmitted to the terminals.

**10.** The apparatus of claim 7,
  wherein the frequency resources for each of the multiple terminals allocated at the first transmission time include one of the blocks allocated as a frequency resource for each of predetermined terminals among the multiple terminals, the divided blocks are divided from the series of resource units, the divided blocks include at least one resource unit in each of levels in a first group of an uppermost level up to a predetermined level, and
  wherein the frequency resources are allocated to each of the multiple terminals without collisions between terminals at the first transmission time and include resource units included in remaining blocks, which are the blocks not allocated to the predetermined terminals among the multiple terminals, allocated as frequency resources for remaining terminals except for the predetermined terminals among the multiple terminals, in each of levels in a second group, excluding the levels in the first group .

**11.** The apparatus of claim 10, wherein blocks in a same level among the several levels of the first group are identical to each other in a number of resource units included therein.

**12.** The apparatus of claim 10, wherein blocks in each level of the several levels of the first group are different from each other in a number of resource units included therein.

## Patentansprüche

**1.** Verfahren zur Zuweisung von Frequenzressourcen (370), die für mehrere Endgeräte in einem Frequenzteilungs-Multiplexing-, FDM-, Drahtloskommunikationssystem zu verwenden, in welchem eine Basisstation (1200) mit den mehreren Endgeräten (1100) in einem Dienstfrequenzband kommuniziert, wobei das Verfahren umfasst:

Unterteilen, gemäß einer Knotenbaumstruktur mit mehreren Ebenen, einer Reihe von Ressourceneinheiten, die aus einer Gruppe aus aufeinanderfolgenden Unterträgern in dem Dienstfrequenzband gebildet sind, in Blöcke (332, 333, 342, 343, 352, 353) aus aufeinanderfolgenden Ressourceneinheiten entsprechend jeweiligen Knoten der Knotenbaumstruktur auf jeder Ebene, wobei jeder Knoten logische Frequenzressourcen ausdrückt und Frequenzressourcen von Knoten, die zu einer unteren Ebene (342, 343) gehören, in Frequenzressourcen eines Knotens enthalten sind, die zu ihrer oberen Ebene (332) gehören, und Zuweisen von einem der Knoten (301, 302, 303, 304) zu einem jeweiligen Endgerät (331, 341, 351, 360) als eine Frequenzressource ohne Kollisionen zwischen Endgeräten bei einer ersten Übertragungszeit (431); und
Anwenden eines Frequenzspringens (440-471) auf die Blöcke, die als die Frequenzressourcen jedes der Endgeräte zugewiesen sind derart, dass die Blöcke jeweils eine andere Frequenzressource aus den Frequenzressourcen haben, die zu einer ersten Übertragungszeit verwendet werden, wobei das Frequenzspringen hierarchisch an jedem Knoten, der einer ersten Ebene entspricht, wobei eine Null-Ebene allen Ressourcen des Dienstfrequenzbandes entspricht, bis zu denjenigen Ebenen der mehreren Ebenen ausgeführt wird, zu denen jeder Knoten gehört, der der ersten Ebene entspricht, und wobei Knoten in jeder Ebene ein Frequenzspringen innerhalb von Frequenzressourcen ausführt, die zu den gleichen oberen Knoten jeder Ebene gehören, und Zuweisen der ein Frequenzspringen durchlaufenden Blöcke als Frequenzressourcen für jedes der Endgeräte zu einer zweiten Übertragungszeit (432),
wobei die Blöcke in mindestens einer der Ebenen sich voneinander in der Anzahl der darin enthaltenen Ressourceneinheiten unterscheiden (760, 761),
wobei Frequenzbänder, die einzelnen Endgeräten zugewiesen sind, sich in der Größe unterscheiden.

**2.** Verfahren nach Anspruch 1, wobei die Blöcke in jeder der mehreren Ebenen sich in einer Anzahl von darin enthaltenen Ressourceneinheiten voneinander unterscheiden.

**3.** Verfahren nach Anspruch 1, wobei ein Vorgang zur Zuweisung von Frequenzressourcen für jedes der Endgeräte zu der zweiten Übertragungszeit durch Anwenden eines Frequenzspringens auf der Grundlage von Sprungmustern ausgeführt wird, die zuvor an die Endgeräte übertragen werden.

**4.** Verfahren nach Anspruch 1, wobei der Schritt des Unterteilens umfasst: Unterteilen der Reihe aus Ressourceneinheiten in Blöcke aus aufeinanderfolgenden Ressourceneinheiten in jeder Ebene einer ersten Gruppe aus Ebenen einer obersten Ebene bis zu einer vorbestimmten Ebene, und
wobei der Schritt des Zuweisens umfasst: Zuweisen eines der Blöcke zu einem jeweiligen von vorbestimmten Endgeräten der mehreren Endgeräte als eine exklusive Frequenzressource und Zuweisen von Ressourceneinheiten, die in den verbleibenden Blöcken enthalten sind und die in vorbestimmten Endgeräten nicht als Frequenzressourcen für verbleibende Endgeräte aus den mehreren Endgeräten zugewiesen sind, in jeder Ebene aus einer zweiten Gruppe, ohne die Ebenen in der ersten Gruppe.

**5.** Verfahren nach Anspruch 4, wobei Blöcke in einer gleichen Ebene aus den mehreren Ebenen in der ersten Gruppe in der Anzahl von darin enthaltenen Ressourceneinheiten identisch zueinander sind.

**6.** Verfahren nach Anspruch 4, wobei Blöcke in jeder Ebene der mehreren Ebenen in der ersten Gruppe sich in einer Anzahl von darin enthaltenen Ressourceneinheiten voneinander unterscheiden.

**7.** Vorrichtung zur Übertragung von Daten in einem Frequenzteilungs-Multiplexing-, FDM-, Drahtloskommunikationssystem, in welchem eine Basisstation (1200) mit mehreren Endgeräten (1100) in einem Dienstfrequenzband kommuniziert, wobei die Vorrichtung umfasst:

einen Generator (1112) zur Erzeugung eines Datensymbols;

einen Decodierer (1111) zum Decodieren von Frequenzressourcenzuweisungsinformation aus einer empfangenen Steuerinformation; und

eine Zuordnungseinheit (1115) zur Zuordnung des Datensymbols zu Frequenzressourcen, die aus der decodierten Frequenzressourcenzuweisungsinformation erhalten werden, und zur Ausgabe von Übertragungsdaten; wobei die Frequenzressourcenzuweisungsinformation Information über Blöcke aus Frequenzressourcen enthält, die ohne Kollisionen zwischen Endgeräten jedem der mehreren Endgeräte zu einer ersten Übertragungszeit zugewiesen sind, mit Knoten und ihren zugehörigen Signalisierungen in einer Knotenbaumstruktur mit mehreren Ebenen, wobei jeder Knoten logische Frequenzressourcen ausdrückt, und Frequenzressourcen von Knoten, die zu einer unteren Ebene gehören, in den Frequenzressourcen eines Knotens, der zu ihren oberen Ebenen gehört, enthalten sind, und mit Information für die Frequenzressourcen für jedes der mehreren Endgeräte, die zu einer zweiten Übertragungszeit zugewiesen ist,

wobei die jeweiligen Knoten der Knotenbaumstruktur, die Blöcken entsprechen, gebildet werden durch Unterteilen, gemäß der Knotenbaumstruktur, einer Reihe von Ressourceneinheiten, die aus einer Gruppe aufeinanderfolgender Unterträger in dem Dienstfrequenzband gebildet sind, in Blöcke (332, 333, 342, 343, 352, 353) aus aufeinanderfolgenden Ressourceneinheiten auf jeder Ebene,

wobei die Blöcke in mindestens einer der Ebenen der Knotenbaumstruktur sich in einer Anzahl von darin enthaltenen Ressourceneinheiten voneinander unterscheiden,

wobei die den einzelnen Endgeräten zugewiesenen Frequenzbänder sich in der Größe unterscheiden.

8. Vorrichtung nach Anspruch 7, wobei die Blöcke in jeder der mehreren Ebenen sich in einer Anzahl an darin enthaltenen Ressourceneinheiten voneinander unterscheiden.

9. Vorrichtung nach Anspruch 7, wobei ein Vorgang zur Zuweisung von Frequenzressourcen für jedes der Endgeräte an der zweiten Übertragungszeit ausgeführt wird, indem ein Frequenzspringen auf der Grundlage von Sprungmustern ausgeführt wird, die zuvor an die Endgeräte übertragen wurden.

10. Vorrichtung nach Anspruch 7,
wobei die Frequenzressourcen für jedes der mehreren Endgeräte, die an der ersten Übertragungszeit zugewiesen sind, einen der Blöcke enthält, der als Frequenzressource für jedes für vorbestimmten Endgeräten aus den mehreren Endgeräten zugewiesen ist, wobei die unterteilten Blöcke aus der Reihe aus Ressourceneinheiten unterteilt werden und die unterteilten Blöcke mindestens eine Ressourceneinheit in jeder Ebene in einer ersten Gruppe einer obersten Ebene bis zu einer vorbestimmten Ebene enthalten, und

wobei die Frequenzressourcen jedem der mehreren Endgeräte ohne Kollisionen zwischen Endgeräten an der ersten Übertragungszeit zugewiesen werden und Ressourceneinheiten, die in verbleibenden Blöcken enthalten sind, umfassen, die die Blöcke sind, die den vorbestimmten Endgeräten der mehreren Endgeräte nicht zugewiesen sind, die als Frequenzressourcen für verbleibende Endgeräte mit Ausnahme der vorbestimmten Endgeräte der mehreren Endgeräte zugewiesen sind, für jede Ebene einer zweiten Gruppe ohne die Ebenen in der ersten Gruppe

11. Vorrichtung nach Anspruch 10, wobei Blöcke in einer gleichen Ebene der mehreren Ebenen der ersten Gruppe in der Anzahl an darin enthaltenen Ressourceneinheiten identisch sind.

12. Vorrichtung nach Anspruch 10, wobei Blöcke in jeder Ebene der mehreren Blöcke der ersten Gruppe in der Anzahl an darin enthaltenen Ressourceneinheiten voneinander verschieden sind.

**Revendications**

1. Procédé d'affectation de ressources de fréquence (370) à utiliser pour plusieurs terminaux dans un système de communication sans fil de multidiffusion de division de fréquence, FDM, dans lequel une station de base (1200) communique avec de multiples terminaux (1100) sur une bande de fréquence de service, le procédé comprenant les opérations suivantes:

diviser, selon une structure d'arborescence de noeuds comprenant plusieurs niveaux, une série d'unités de ressources formées d'un ensemble de sous-porteuses consécutives dans la bande de fréquence de service en blocs (332, 333, 342, 343, 352, 353) d'unités de ressources consécutives correspondant à des noeuds respectifs de la structure arborescente à chaque niveau, chaque noeud exprimant des ressources de fréquence logique et les ressources de fréquence de noeuds appartenant à un niveau inférieur (342, 343) sont compris dans les ressources de fréquence d'un noeud appartenant à leur niveau supérieur (332) et attribuent à chacun des terminaux (331, 341, 351, 360) l'un des noeuds (301, 302, 303, 304) en tant que ressource de fréquence sans collisions entre des terminaux, à un premier instant de transmission (431); et

sauter (440-471) les blocs affectés comme ressources de fréquence pour chacun des terminaux afin que les blocs aient chacun une ressource de fréquence différente des ressources de fréquence utilisées à un premier instant de transmission, le saut étant effectué de manière hiérarchique à chaque noeud correspondant à un premier niveau, dans lequel un niveau zéro correspond à la totalité des ressources de la bande de fréquence de service, jusqu'aux niveaux auxquels chaque noeud correspondant au premier niveau appartient, parmi plusieurs niveaux, et dans lequel les noeuds de chaque niveau effectuent des sauts dans les ressources de fréquence appartenant au même noeud supérieur de chaque niveau, et affecter les blocs sautés comme ressources de fréquence pour chacun des terminaux à un second instant de transmission (432),

dans lequel les blocs dans au moins l'un des niveaux sont différents l'un de l'autre (760, 761) dans un certain nombre d'unités de ressources incluses dans celui-ci,

dans lequel les bandes de fréquence affectées à des terminaux individuels ont une taille différente.

2. Procédé selon la revendication 1, dans lequel les blocs dans chacun des différents niveaux sont différents l'un de l'autre dans un certain nombre d'unités de ressources incluses dans celui-ci.

3. Procédé selon la revendication 1, dans lequel une opération d'affectation des ressources de fréquence pour chaque des terminaux au second moment de transmission est effectuée par des sauts sur la base de motifs de saut précédemment transmis aux terminaux.

4. Procédé selon la revendication 1, dans lequel l'étape de division comprend la division de la série d'unités de ressources en blocs d'unités de ressources consécutives à chaque niveau d'un premier groupe de niveaux d'un niveau le plus élevé jusqu'à un niveau prédéterminé, et

dans lequel l'étape d'affectation comprend l'étape consistant à affecter, à chacun des terminaux prédéterminés parmi les multiples terminaux, l'un des blocs comme ressource de fréquence exclusive, et à affecter des unités de ressources incluses dans les blocs restants, unités non affectées aux terminaux prédéterminés comme ressources de fréquence pour les terminaux restants parmi les multiples terminaux, dans chacun des niveaux d'un second groupe, à l'exclusion des niveaux du premier groupe.

5. Procédé selon la revendication 4, dans lequel les blocs dans un même niveau parmi les différents niveaux dans le premier groupe sont identiques l'un de l'autre dans un certain nombre d'unités de ressources incluses dans celui-ci.

6. Procédé selon la revendication 4, dans lequel les blocs dans chaque niveau des différents niveaux dans le premier groupe sont différents l'un de l'autre dans un certain nombre d'unités de ressources incluses dans celui-ci.

7. Appareil de transmission de données dans un système de communication sans fil de multidiffusion de division de fréquence, FDM, dans lequel une station de base (1200) communique avec plusieurs terminaux (1100) dans une bande de fréquence de service, l'appareil comprenant:

un générateur (1112) permettant de générer un symbole de données;
un décodeur (1111) pour décoder des informations d'affectation de ressources de fréquence à partir d'informations de commande reçues; et
un mappeur (1115) pour mapper le symbole de données sur des ressources de fréquence obtenues à partir des informations d'affectation de ressources de fréquence décodées et pour émettre des données de transmission;
dans lequel les informations d'affectation de ressources de fréquence comprennent des informations sur des blocs de ressources de fréquence affectes sans collision entre des terminaux à chacun des multiples terminaux à un premier moment de transmission, comprenant des noeuds et leur signalisation associée dans une structure d'arborescence de noeuds comprenant plusieurs niveaux, chaque noeud exprimant des ressources de fréquence de valeur logique et les ressources de fréquence des noeuds appartenant à un niveau inférieur sont incluses dans les ressources de fréquence d'un noeud appartenant à leur niveau supérieur, ainsi que des informations sur les ressources de fréquence pour chacun des multiples terminaux affectés à un second moment de transmission,

dans lequel les blocs correspondant aux noeuds respectifs de la structure arborescente sont formés en divisant, selon la structure arborescente des noeuds, une série d'unités de ressources formées d'un ensemble de sous-porteuses consécutives dans la bande de fréquences de service en blocs (332, 333, 342, 343, 352, 353) d'unités de ressources consécutives à chaque niveau,
dans lequel les blocs dans au moins l'un des niveaux de la structure arborescente de noeuds sont différents l'un de l'autre dans un certain nombre d'unités de ressources incluses dans celui-ci,
dans lequel les bandes de fréquence affectées à des terminaux individuels ont une taille différente.

8. Appareil selon la revendication 7, dans lequel les blocs dans chacun des différents niveaux sont différents l'un de l'autre dans un certain nombre d'unités de ressources incluses dans celui-ci.

9. Appareil selon la revendication 7, dans lequel une opération d'affectation des ressources de fréquence pour chaque des terminaux au second moment de transmission est effectuée par des sauts sur la base de motifs de saut précédemment transmis aux terminaux.

10. Appareil selon la revendication 7,
dans lequel les ressources de fréquence pour chacun des multiples terminaux affectés au premier moment de transmission comprennent l'un des blocs affecté comme ressource de fréquence pour chacun des terminaux prédéterminés parmi les multiples terminaux, les blocs divisés sont divisés à partir de la série d'unités de ressources, les blocs comprennent au moins une unité de ressources dans chacun des niveaux d'un premier groupe d'un niveau le plus élevé jusqu'à un niveau prédéterminé, et
dans lequel les ressources de fréquence sont affectées à chacun des multiples terminaux sans collision entre des terminaux au premier moment de transmission et comprennent des unités de ressources incluses dans les blocs restants, qui sont les blocs non affectés aux terminaux prédéterminés parmi les multiples terminaux, affectés comme ressources de fréquence pour les terminaux restants à l'exception des terminaux prédéterminés parmi les multiples terminaux, dans chacun des niveaux d'un second groupe, à l'exclusion des niveaux du premier groupe.

11. Appareil selon la revendication 10, dans lequel les blocs dans un même niveau parmi les différents niveaux du premier groupe sont identiques l'un de l'autre dans un certain nombre d'unités de ressources incluses dans celui-ci.

12. Appareil selon la revendication 10, dans lequel les blocs dans chaque niveau des différents niveaux du premier groupe sont différents l'un de l'autre dans un certain nombre d'unités de ressources incluses dans celui-ci.

FIG.1

FIG.2

LEVEL (310)

$i_0$ (320)

0 ————————————————————————————————————————○

UE1 (301)

$i_{0,0}$ (330)

$i_{0,1}$ (331)

1 ————————————————————————————————○——————————————————————————————————●

UE2 (302)

$i_{0,0,0}$ (340)

$i_{0,0,1}$ (341)

2 ——————————————————○——————————————————●

UE3 (303)

$i_{0,0,0,0}$ (350)

$i_{0,0,0,1}$ (351)

3 ——————————○——————————●

4 ——————————●

$i_{0,0,0,0,0}$ (360)

UE4 (304)

FIG.3A

EP 1 863 215 B1

FIG.3B

EP 1 863 215 B1

1 Hopping process (430)

FREQUENCY

RU index (420)

n (431)

| |
|---|
| 304 |
| |
| 303 |
| 303 |
| 303 |
| 302 |
| 302 |
| 302 |
| 302 |
| 302 |
| 302 |
| 301 |
| 301 |
| 301 |
| 301 |
| 301 |
| 301 |
| 301 |
| 301 |
| 301 |
| 301 |
| 301 |
| 301 |

0
1

23

(440)

(443)

(450)

(460)

(451)

n+1 (432)

| |
|---|
| 301 |
| 301 |
| 301 |
| 301 |
| 301 |
| 301 |
| 301 |
| 301 |
| 301 |
| 301 |
| 301 |
| 301 |
| 304 |
| 303 |
| 303 |
| 303 |
| 302 |
| 302 |
| 302 |
| 302 |
| 302 |
| 302 |

(441)

(444)

(470)

n+2 (433)

| |
|---|
| 302 |
| 302 |
| 302 |
| 302 |
| 302 |
| 302 |
| |
| 304 |
| 303 |
| 303 |
| 303 |
| 301 |
| 301 |
| 301 |
| 301 |
| 301 |
| 301 |
| 301 |
| 301 |
| 301 |
| 301 |
| 301 |

(452)

(453)

(463)

(461)

(471)

(442)

(445)

n+3 (434)

| |
|---|
| 301 |
| 301 |
| 301 |
| 301 |
| 301 |
| 301 |
| 301 |
| 301 |
| 301 |
| 301 |
| 301 |
| 301 |
| 302 |
| 302 |
| 302 |
| 302 |
| 302 |
| 302 |
| 304 |
| |
| 303 |
| 303 |
| 303 |

(454)

(456)

(464)

(462)

Subframe (410)

HARQ RTT (411)

TIME

| UE1 | (301) |
|---|---|
| UE2 | (302) |

| UE3 | (303) |
|---|---|
| UE4 | (304) |

FIG.4

EP 1 863 215 B1

FIG.5

FIG.6

FIG.7

EP 1 863 215 B1

FIG.8

EP 1 863 215 B1

LEVEL (910)

FIG.9A

EP 1 863 215 B1

Level 3    Level 2    Level 1    Level 0

1 RU (970)

Bandwidth (980)

304
304
304
304
302
302
302
302
302
301
301
301
301
303
303
303
303

$i_{0,0,0,0}$ (950)

$i_{0,0,0,1}$ (951)

$i_{0,0,1,0}$ (952)

$i_{0,0,1,1}$ (953)

$i_{0,0,0}$ (940)

$i_{0,0,1}$ (941)

$i_{0,0}$ (930)

$i_{0,1}$ (931)

$i_{0,2,0}$ (943)

$i_{0,2,1}$ (944)

$i_{0,2}$ (932)

$i_0$ (920)

UE1 (301)
UE2 (302)
UE3 (303)
UE4 (304)

FIG.9B

EP 1 863 215 B1

FIG.10

EP 1 863 215 B1

FIG.11

EP 1 863 215 B1

FIG.12

EP 1 863 215 B1

START

DEMODULATE UL CONTROL
SIGNAL TRANSMITTED OVER DL — 1301

1303
RESOURCE
ALLOCATED?  NO

YES

GENERATE DATA SIGNAL
FOR UL TRANSMISSION — 1305

MAP DATA SIGNAL TO
ALLOCATED FREQUENCY
RESOURCE AND TRANSMIT DATA — 1307

END

FIG.13

START

n = 1
index = 0 — 1401

STORE HOPPING PATTERN
IN n-TH LEVEL FOR
NODE ALLOCATED
AT CORRESPONDING TIME — 1403

INDEX = INDEX + (INDEX VALUE
BY HOPPING IN n-TH LEVEL) — 1405

n = n + 1 — 1407

IDENTICAL LEVEL? — 1409

NO

YES

MAP DATA TO AS MANY
FREQUENCY RESOURCES AS
NUMBER OF RUs ALLOCATED
BEGINNING FROM (INDEX)-TH RU — 1411

END

FIG.14

START

n = 1
index = 0    ~1501

LOAD NEW RESOURCE TREE
STRUCTURE AND ITS HOPPING
PATTERN FOR EACH NODE    /1505

YES

UPDATED?    /1503

NO

STORE HOPPING PATTERN
IN n-TH LEVEL FOR NODE
ALLOCATED AT
CORRESPONDING TIME    ~1507

INDEX = INDEX + (INDEX VALUE
BY HOPPING IN n-TH LEVEL)    ~1509

n = n + 1    /1515

IDENTICAL LEVEL?    /1511

NO

YES

MAP DATA TO AS MANY
FREQUENCY RESOURCES AS
NUMBER OF RUs ALLOCATED
BEGINNING FROM (INDEX)-TH RU    ~1513

END

FIG.15

START

RECEIVE UL SIGNAL — 1601

SEPARATE RECEIVED SIGNALS
FOR INDIVIDUAL USERS BASED ON UL
RESOURCE ALLOCATION INFORMATION — 1603

DEMODULATE DATA SEPARATELY
FOR INDIVIDUAL USERS — 1605

END

FIG.16

START

GATHER UL SCHEDULING
INFORMATION AND
FEEDBACK INFORMATION ─ 1701

ANY
MODIFICATION IN TREE
STRUCTURE? ⌐1703

NO

YES

GENERATE SIGNALING
INFORMATION FOR MODIFIED ─ 1705
NODE TREE STRUCTURE

GENERATE SIGNALING
INFORMATION FOR EXISTING ─ 1707
NODE TREE STRUCTURE OR
NO RELATED SIGNALING

TRANSMIT SIGNALING
INFORMATION BY DL SIGNALING ─ 1709

TRANSMIT UL DATA AND
FEEDBACK UPON RECEIPT OF
SIGNALING INFORMATION FOR ─ 1711
NODE TREE STRUCTURE

END

FIG.17

43

FIG.18A

FIG.18B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 9843378 A